(19) Europäisches Patentamt
European Patent Office
Office européen des brevets

(11) Veröffentlichungsnummer : **0 457 715 A2**

# (12) EUROPÄISCHE PATENTANMELDUNG

(21) Anmeldenummer : **91810197.3**

(51) Int. Cl.[5] : **C09B 67/02**, C09B 67/24

(22) Anmeldetag : **22.03.91**

(30) Priorität : **03.04.90 CH 1103/90**
**17.08.90 CH 2683/90**

(43) Veröffentlichungstag der Anmeldung :
**21.11.91 Patentblatt 91/47**

(84) Benannte Vertragsstaaten :
**BE CH DE ES FR GB IT LI NL**

(71) Anmelder : **CIBA-GEIGY AG**
**Klybeckstrasse 141**
**CH-4002 Basel (CH)**

(72) Erfinder : **Lacroix, Roger, Dr.**
**Rue Vauban 24**
**F-68300 Village-Neuf (FR)**
Erfinder : **Strahm, Ulrich, Dr.**
**Schartenflueweg 49**
**CH-4147 Aesch (CH)**

(54) **In Polyvinylalkoholhüllen verpackte faserreaktive Farbstoffe.**

(57) Die Erfindung betrifft eine stabile, staubfreie Handelsform enthaltend mindestens einen wasserlöslichen monoreaktiven Farbstoff, welcher einen Monofluor-s-triazinreaktivrest enthält, und/oder mindestens einen wasserlöslichen polyreaktiven Farbstoff in einer Hülle aus Polyvinylalkohol.

Die mit der stabilen, staubfreien Handelsform erhaltenen Färbungen zeichnen sich durch gute Allgemeinechtheiten aus.

EP 0 457 715 A2

Jouve, 18, rue Saint-Denis, 75001 PARIS

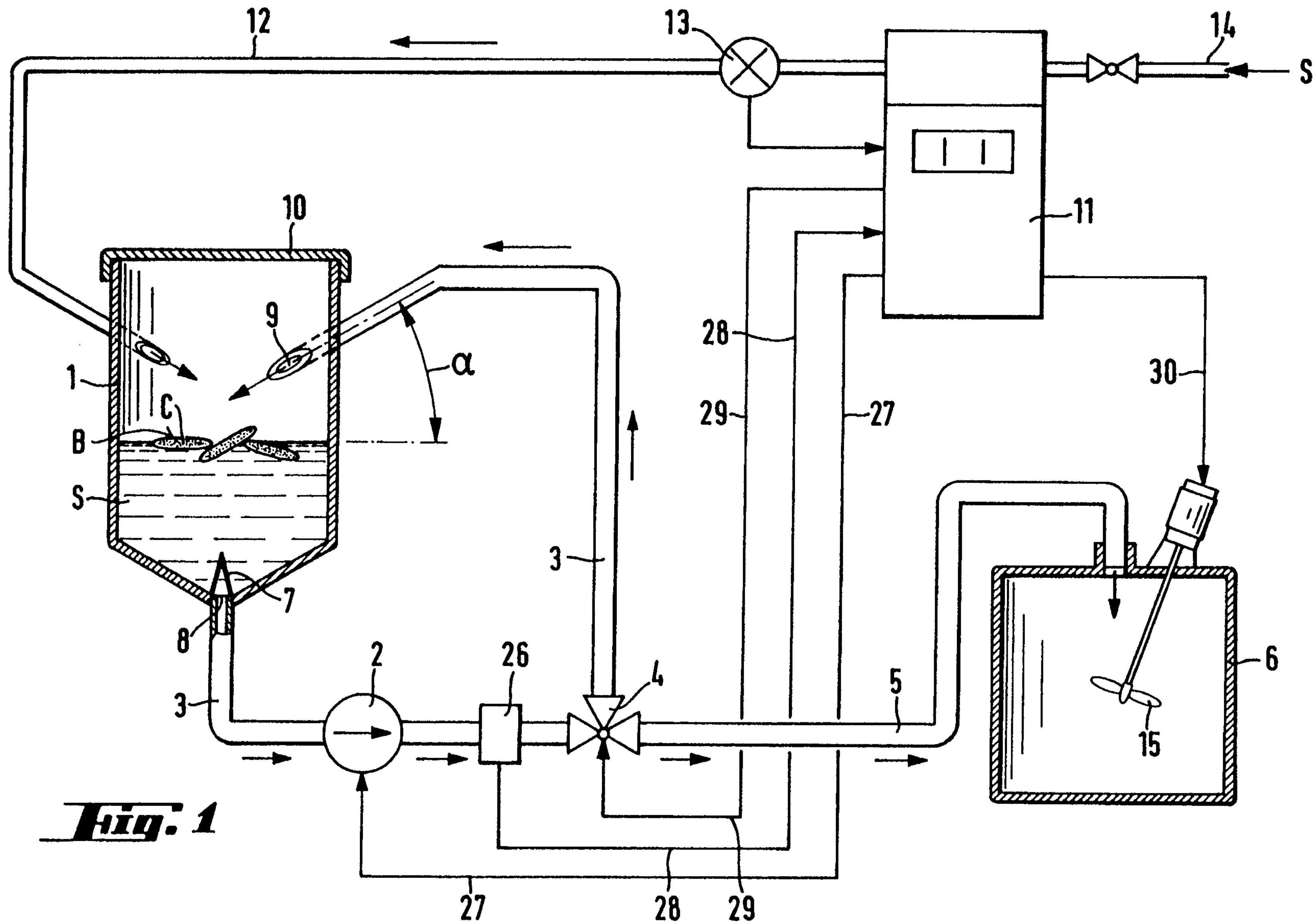


Fig. 1

Die Erfindung betrifft eine neue Handelsform von faserreaktiven Farbstoffen, Verfahren zur Herstellung dieser Handelsform sowie deren Verwendung. Die neue Handelsform ist eine Polyvinylalkoholhülle, insbesondere in Beutelform, enthaltend mindestens einen monoreaktiven Fluor-s-triazinreaktivfarbstoff und/oder mindestens einen polyreaktiven Farbstoff.

Es ist lange bekannt, die verschiedensten Produkte in Kunststoffhüllen zu verpacken. Diese Verpackungen (Beutel) sind auch für Farbstoffe vorteilhaft, denn sie erleichtern die Dosierung der Farbstoffe ohne Staubentwicklung. Insbesondere bei faserreaktiven Farbstoffen ist die Dosierung als pulverförmiges Schüttgut unerwünscht. Für einige faserreaktive Farbstoffe ist die Verpackung in einer Hülle aus Polyvinylalkohol, die sich in einem wässrigen Färbebad auflöst und somit die Dosierung der Farbstoffe ohne Staubentwicklung und ohne Hautkontakt ermöglicht, bereits bekannt. Es handelt sich dabei um Reaktivfarbstoffe mit nur geringer oder mittlerer Reaktivität der faserreaktiven Gruppe. Ferner sind nur Reaktivfarbstoffe mit einem einzigen faserreaktiven Rest in Polyvinylalkoholhüllen verpackt worden.

Bekannt ist ferner, dass die Festigkeit einer Polyvinylalkoholhülle von deren Wassergehalt abhängt. Um eine konstante Feuchtigkeitsatmosphäre zu gewährleisten, wird dem Farbstoff in der Polyvinylalkoholhülle ein Salzhydrat beigemengt.

Die Tatsache, dass bei einer hohen relativen Luftfeuchtigkeit diese Feuchtigkeit durch die Polyvinylalkoholhülle hindurch in das Farbstoffpulver diffundieren kann, und dass eine bestimmte konstante Feuchtigkeit in der Umgebung der Polyvinylalkoholhülle notwendig ist, um eine vorgegebene Reissfestigkeit zu garantieren, haben dazu beigetragen, dass die in den letzten Jahren bekannt gewordenen hochreaktiven Farbstoffe und ebenso die polyreaktiven Farbstoffe nicht in einer Verpackung aus Polyvinylalkohol abgegeben werden, da bekanntlich ein zu hoher Feuchtigkeitsgehalt, die Reaktivität des so verpackten Farbstoffes, z.B. durch Hydrolyse, mindern kann und eine Dosierung nicht reproduzierbar erfolgen kann. Ferner ist bei Farbstoffen mit hoher Reaktivität der reaktiven Gruppe die Möglichkeit der Reaktion mit dem Polyvinylalkohol nicht auszuschliessen.

Der vorliegenden Erfindung liegt somit die Aufgabe zugrunde, eine Verpackung für bestimmte hochreaktive Farbstoffe zu finden, die über einen langen Zeitraum gleichbleibende Reaktivität der Farbstoffe gewährleistet.

Es hat sich gezeigt, dass die neue Handelsform die gestellte Aufgabe erfüllt.

Gegenstand der vorliegenden Erfindung ist eine stabile staubfreie Handelsform enthaltend mindestens einen wasserlöslichen monoreaktiven Farbstoff, welcher einen Monofluor-s-triazinreaktivrest enthält, und/oder mindestens einen wasserlöslichen polyreaktiven Farbstoff in einer Hülle aus Polyvinylalkohol.

Gemäss der vorliegenden Erfindung wird als Verpackungsmaterial eine wasserlösliche Hülle aus Polyvinylalkohol verwendet. Diese Hülle, die auch als Folie bezeichnet werden kann, vorzugsweise in Beutelform, soll, ohne dass sie angegriffen wird entweder einen mono-reaktiven Farbstoff mit einer einzigen faserreaktiven Fluor-s-triazingruppe, oder mindestens einen faserreaktiven Farbstoff mit mindestens zwei Reaktivresten beliebiger Art (polyreaktiver Farbstoff) oder eine Mischung aus mindestens einem Farbstoff mit einer einzigen Fluor-s-triazingruppe und mindestens einem polyreaktiven Farbstoff aufnehmen. Nach dem Eintauchen der allseits verschlossenen Hülle in eine wässrige Lösung soll sich die Hülle leicht auflösen.

Die als Verpackungsmaterial erfindungsgemäss zu verwendende Hülle aus Polyvinylalkohol ist farblos, durchsichtig, bedruckbar und gut abbaubar. Die Hüllen sind löslich in Wasser. Die handelsüblichen Polyvinylalkohole enthalten in der Regel 0,5 bis 2 % Estergruppen, die aus der unvollständigen Verseifung beim Herstellungsverfahren durch Verseifen von Polyvinylacetat stammen und die keinen Einfluss auf die charakteristischen Eigenschaften des Polyvinylalkohols ausüben. Polyvinylalkohole mit einem höheren Anteil an Acetat, die durch partielle Verseifung von Polyvinylacetat hergestellt werden, besitzen noch eine ausreichende Wasserlöslichkeit. So sind Hüllen mit einem Anteil zwischen 0 und 20 % Polyvinylacetat geeignet.

Zur Herstellung von Hüllen (z.B. als Beutel oder Säcke) aus Polyvinylalkohol können die in der Technik üblichen Methoden angewendet werden. So lässt sich z.B. die Polyvinylalkoholhülle heiss versiegeln. Die Polyvinylalkoholhüllen können auch auf jede beliebige andere Art hergestellt werden. So kann z.B. ein biegsamer Polyvinylalkoholstreifen in eine Abfüll- oder Verpackungsmaschine geführt werden, dort zu einem Tubus geformt, mit Farbstoffpulver oder Granulat gefüllt und durch Zusammendrücken zu einem geschlossenen Behälter geformt werden. Ferner können grössere Hüllen mit einer Schnur aus Polyvinylalkohol zugebunden werden.

Die Dicke der Polyvinylalkoholhülle, die für die Packung gemäss der Erfindung verwendet werden kann, liegt zwischen 25 und 70 µm, insbesondere zwischen 25 und 40 µm. Dünnere Hüllen haben nicht die erforderliche Zugfestigkeit, um, ohne zu reissen, das Gewicht des Packungsinhalts zu tragen, während dickere Hüllen unwirtschaftlich sind und Löseschwierigkeiten bereiten können. Die einzelnen Hüllen aus Polyvinylalkohol können zur Lagerung oder zum Versand in einem entsprechenden Versandbehälter untergebracht werden, wobei es sich als günstig erwiesen hat, die Versandbehälter mit einer Auskleidung, die in der Regel wasserunlöslich ist, zu versehen. Als Beispiele seien Auskleidungen aus Polyvinylchlorid, Polyester oder Polypropylen genannt. Vorteil dieser Verpackungsart ist, dass die Polyvinylalkoholhüllen luft- und damit feuchtigkeitsdicht verpackt

sind, um das Auflösen der Polyvinylalkoholhüllen an feuchter Luft zu vermeiden, und andererseits das zu starke Austrocknen der Polyvinylalkoholhülle zu verhindern, sowie die Hüllen vor Einwirkung von Dampf und Wasser zu schützen.

Bevorzugt ist eine Handelsform enthaltend mindestens einen monoreaktiven Farbstoff der Formel

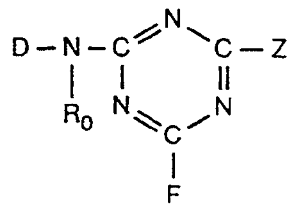

(1),

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin-, Stilben-, Triphenylmethan-, Xanthen-, Thioxanthon-, Naphthochinon-, Pyrenchinon- oder Perylentetracarbimid-Reihe, $R_o$ Wasserstoff oder gegebenenfalls substituiertes $C_1$-$C_4$-Alkyl, und Z eine gegebenenfalls substituierte Aminogruppe, eine gegebenenfalls substituierte Mercaptogruppe, eine gegebenenfalls substituierte Hydroxygruppe, oder ein gegebenenfalls substituierter Kohlenwasserstoffrest ist.

Falls $R_o$ in Formel (1) einen $C_1$-$C_4$-Alkylrest bedeutet, kann dieser weitersubstituiert sein, z.B. durch Halogen, wie z.B. Fluor, Chlor oder Brom, Hydroxy, Cyan, $C_1$-$C_4$-Alkoxy, wie z.B. Methoxy und Äthoxy, Carboxy, Sulfato oder Sulfo. Als Beispiele für $R_o$ seien genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, β-Hydroxyäthyl, β-Hydroxybutyl, β-Cyanäthyl, Sulfomethyl, β-Sulfoäthyl und β-Sulfatoäthyl.

Die Farbstoffe der Formel (1) enthalten einen einzigen faserreaktiven Rest, den Monofluor-s-triazinrest. Unter faserreaktiven Verbindungen sind solche zu verstehen, die mit den Hydroxygruppen der Cellulose oder mit den Amino-, Hydroxy- oder Thiolgruppen von natürlichen oder synthetischen Polyamiden unter Bildung kovalenter chemischer Bindungen zu reagieren vermögen.

Die Farbstoffe der Formel (1) sind an sich bekannt und werden in Analogie zu bekannten Verfahren hergestellt. So wird z.B. der Rest D-N($R_o$)H mit einem 4,6-Difluor-s-triazin, welches in 2-Stellung durch den Substituenten Z substituiert ist, umgesetzt.

Die in 2-Stellung substituierten 4,6-Difluor-s-triazine werden z.B. durch Umsetzung von Trifluor-s-triazinen mit den erwähnten Amino-, Hydroxy- oder Mercaptoverbindungen erhalten. Der Substituent in 2-Stellung eines 4,6-Difluor-s-triazins kann z.B. der Rest einer der im folgenden genannten Amino-, Hydroxy- und Mercaptoverbindungen sein:

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, Naphthylamin-(1), Naphthylamin-(2), 2-Amino-1-hydroxynaphthalin, 1-Amino-4-hydroxynaphthalin, 1-Amino-8-hydroxy-naphthalin, 1 -Amino-2-hydroxynaphthalin, 1 -Amino-7-hydroxy-naphthalin, Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Aminotoluol-4-sulfonsäure, 2-Aminotoluol-5-sulfonsäure, p-Aminosalicylsäure, 1-Amino-4-carboxy-benzol-3-sulfonsäure, 1 -Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8-und -5,8-disulfonsäure, 2-Naphthylamin-1,5-, -1,6-, - 1,7-, -3,6-, -3,7-, -4,7-, -4,8-, -5,7-und -6,8-disulfonsäure, 1-Naphthylamin-2,4,6-, -2,4,7-, -2,5,7-, -3,5,7-, -3,6,8- und 4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxy-propanol, γ-Aethoxypropanol, β-Aethoxy-β-äthoxy-äthanol, Glycolsäure, Phenol, o-, m- und p-Chlorphenol, o-, m- und p-Nitrophenol, o-, m- und p-Hydroxybenzoesäure, o-, m- und p-Phenolsulfonsäure, Phenol-2,4-disulfonsäure, α-Naphthol, 1-Hydroxynaphthalin-8-sulfonsäure, 2-Hydroxynaphthalin-1-sulfonsäure, 1-Hydroxynaphthalin-5-sulfonsäure, 1-Hydroxynaphthalin-4sulfonsäure, 1-Hydroxynaphthalin-6- oder -7-sulfonsäure,

2-Hydroxynaphthalin-6-, -7-oder -8-sulfonsäure, 2-Hydroxynaphthalin-4-sulfonsäure, 2-Hydroxynaphthalin-4,8- oder -6,8-disulfonsäure, 1-Hydroxynaphthalin-4,8-disulfonsäure, 2-Hydroxynaphthalin-3,6-disulfonsäure, Methanthiol, Aethanthiol, Propanthiol, Isopropanthiol, n-Butanthiol, Thioglykolsäure, Thioharnstoff, Thiophenol, α-Thionaphthol, β-Thionaphthol.

Die Einführung des in 2-Stellung des Triazinrestes stehenden Substituenten kann auch nach der Umsetzung des 2,4,6-Trifluor-s-triazins mit dem Amin D-N($R_o$)H geschehen. Man kann somit z.B. eine der oben genannten Amino-, Hydroxy- oder Mercaptoverbindungen nachträglich mit einem bereits an den Farbstoff gebundenen Dihalogen-s-triazinrest kondensieren.

Wertvolle Amino-fluortriazine sind z.B.:

2-Amino-4,6-difluor-s-triazin, 2-Phenylamino-4,6-difluor-s-triazin, 2-N-Aethyl-N-phenylamino-4,6-difluor-s-triazin, 2-(Methylphenylamino)-4,6-difluor-s-triazin, 2-(Chlorphenylamino)-4,6-difluor-s-triazin, 2-(Sulfophenylamino)-4,6-difluor-s-triazin, 2-N-Methyl-N-(methylphenylamino)-4,6-difluor-s-triazin, 2-N-Methyl-N-(chlorphenylamino)-4,6-difluor-s-triazin, 2-N-Methyl-N-(sulfophenylamino)-4,6-difluor-s-triazin, 2-(2'-Chlor-5'-sulfophenylamino)-4,6-difluor-s-triazin und 2-(Sulfonaphthylamino)-4,6-difluor-s-triazin.

Besonders bevorzugt ist eine Handelsform enthaltend einen Farbstoff der Formel ( 1 ), worin Z $-NH_2$ oder der Rest eines aliphatischen, aromatischen oder heterocyclischen Amins ist, insbesondere worin Z $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino ist, wobei die Alkylreste durch $C_1$-$C_4$-Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann, oder worin Z Morpholino ist.

Ebenfalls bevorzugt ist eine Handelsform enthaltend mindestens einen bi-, tri- oder tetraaktiven Farbstoff. Unter einem bi-, tri- oder tetrareaktivem Farbstoff sind solche Farbstoffe zu verstehen, die zwei, drei oder vier faserreaktive Gruppen beliebiger Art enthalten.

Besonders bevorzugt ist ebenfalls eine Handelsform enthaltend mindestens einen Farbstoff der Formel

$$D{-}(X)_{2\text{-}4} \qquad (2),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin-, Stilben-, Triphenylmethan-, Xanthen-, Thioxanthon-, Naphthochinon-, Pyrenchinon- oder Perylentetracarbimid-Reihe, und $-(X)_{2-4}$ für 2, 3 oder 4 identische oder voneinander verschiedene faserreaktive Reste X der aliphatischen, aromatischen oder heterocyclischen Reihe steht, wobei diese direkt oder über einen Brückenglied an D gebunden sind.

Geeignete faserreaktiver Reste sind beispielsweise solche, die mindestens einen abspaltbaren Substituenten an einem heterocyclischen, aromatischen oder alipharischen Rest gebunden enthaltend.

Als faserreaktive Reste kommen z.B. die in der EP-A-126 025 offenbarten Reste in Betracht.

Als geeignete Reste D in den Formeln (1) und (2) kommen z.B. in Betracht:

a) Reaktivfarbstoffe, worin D der Rest eines Formazanfarbstoffes der Formel

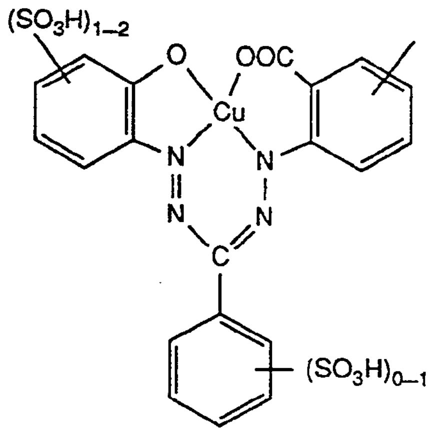

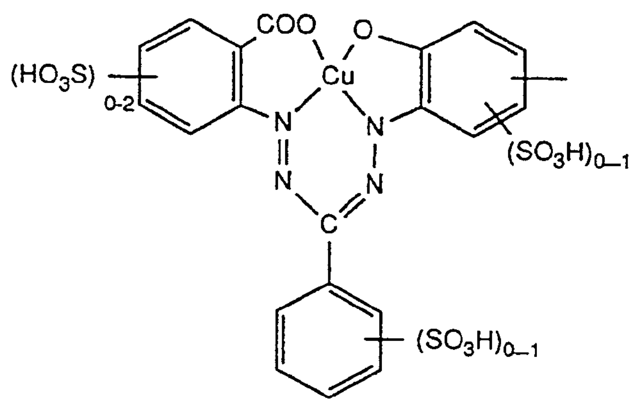

(3a) oder (3b),

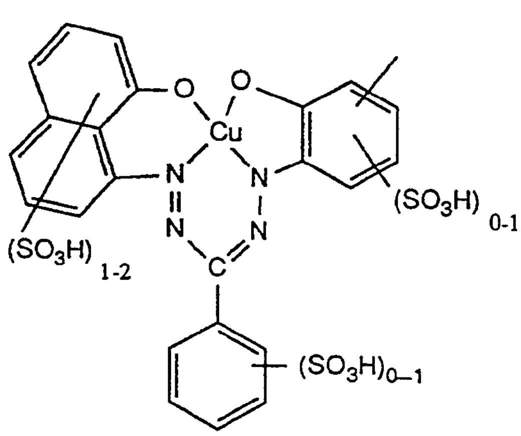

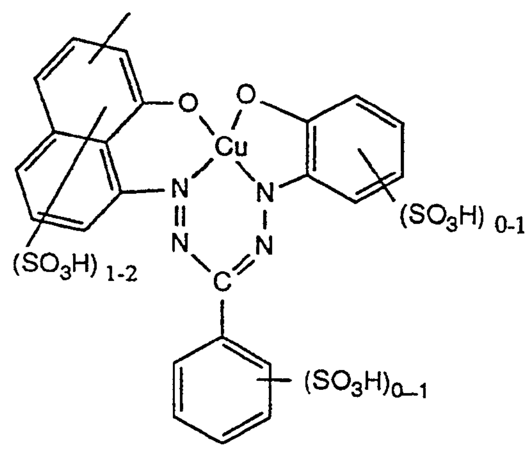

(3c) oder (3d)

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

b) Reaktivfarbstoffe, worin D der Rest eines Anthrachinonfarbstoffes der Formel

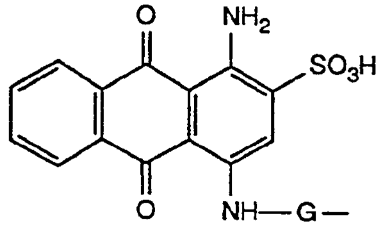

(4)

ist, worin G ein Phenylen-, Cyclohexylen-, Phenylenmethylen- oder $C_2$-$C_6$-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

c) Reaktivfarbstoffe, worin D der Rest eines Phthalocyaninfarbstoffes der Formel

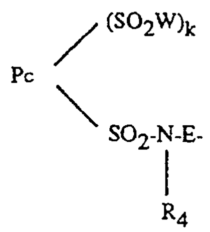

(5)

ist, worin Pc der Rest eines Kupfer- oder Nickelphthalocyanins; W -OH und/oder $-NR_5R_{5'}$; $R_5$ und $R_{5'}$ unabhängig voneinander Wasserstoff oder Alkyl mit 1 bis 4 Kohlenstoffatomen, das durch Hydroxy oder Sulfo substituiert sein kann; $R_4$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1, 2 oder 3 ist.

d) Reaktivfarbstoffe, worin D der Rest eines Dioxazinfarbstoffes der Formel

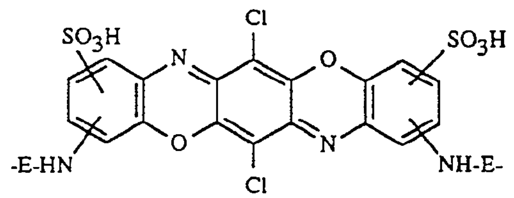

(6a)

oder

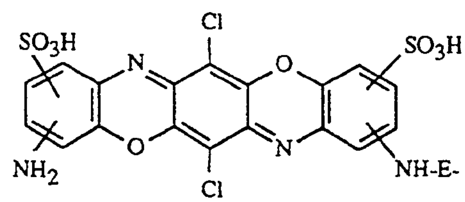

(6b)

oder

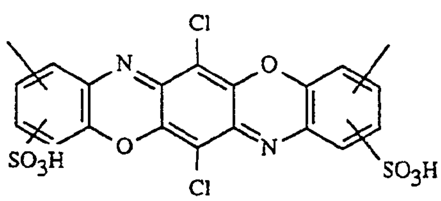

(6c)

ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (6a),(6b) und (6c) durch Alkyl mit 1 bis 4 C-Atomen, Alkoxy mit 1 bis 4 C-Atomen, Acetylamino, Nitro, Halogen, Carboxy, Sulfo oder $-SO_2-Z'$ weitersubstituiert sein können, wobei Z' β-Sulfatoäthyl, β-Thiosulfatoäthyl, β-Phosphatoäthyl, β-Acyloxyäthyl, β-Halogenäthyl oder Vinyl ist.

Interessant sind ferner Reaktivfarbstoffe, worin D ein Mono- oder Disazofarbstoffrest der Formel

$$D_1-N = N-(M-N = N)_u-K- \quad (7a),$$

$$-D_1-N = N-(M-N = N)_u-K \quad (7b)$$

oder

$$-D_1-N = N-(M-N = N)_u-K- \quad (7c),$$

oder eines davon abgeleiteten Metallkomplexes ist; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substituenten tragen können, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest $-SO_2-Z'$, wobei Z'die angegebene Bedeutung hat; u = 0 oder 1 ist; und $D_1$, M und K zusammen mindestens zwei Sulfogruppen, vorzugsweise drei oder vier Sulfogruppen, enthalten.

Ebenfalls interessant sind Reaktivfarbstoffe, worin D ein Disazofarbstoffrest der Formel

$$-D_1-N = N-K-N = N-D_2 \quad (8a),$$

oder

$$-D_1-N = N-K-N = N-D_2- \quad (8b)$$

ist, worin $D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und K bei Azofarbstoffen übliche Substituenten tragen können, insbesondere Hydroxy-, Amino-, Methyl, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest $-SO_2-Z'$, wobei Z'die angegebene Bedeutung hat, und $D_1$, $D_2$ und K zusammen mindestens zwei Sulfogruppen, vorzugsweise drei oder vier Sulfogruppen enthalten.

Von den interessanten Reaktivfarbstoffen der Formeln (7a), (7b), (7c), (8a) und (8b) sind besonders wichtig die Farbstoffe, worin D einen Farbstoffrest der nachfolgenden Formeln (9) und (11) bis (21) bedeutet:

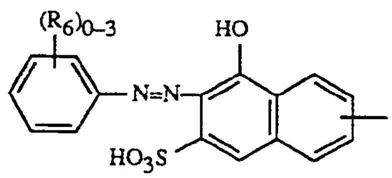

(9a)

oder

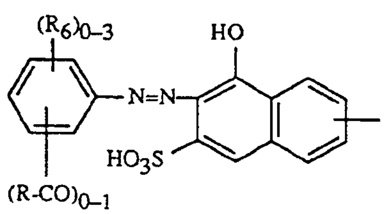

(9b),

worin $R_6$ für $C_1$-$C_4$-Alkyl, $C_1$-$C_4$-Alkoxy, Halogen, $-SO_2-Z'$, Carboxy und Sulfo steht; und Z'β-Sulfatoäthyl, β-Thiosulfatoäthyl, β-Phosphatoäthyl, β-Acyloxyäthyl, β-Halogenäthyl oder Vinyl ist, und R ein Rest der Formel

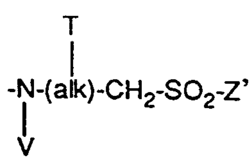

(10a),

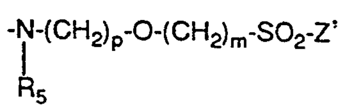

(10b),

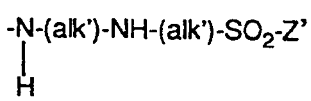

(10c),

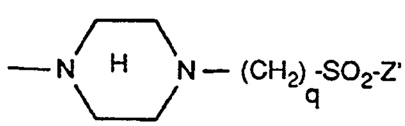

(10d),

Z′ β-Sulfatoäthyl, β-Thiosulfatoäthyl, β-Acyloxyäthyl, β-Halogenäthyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z'$, worin Z′ die oben angegebene Bedeutung hat; $R_5$ Wasserstoff oder $C_1$-$C_6$-Alkyl; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

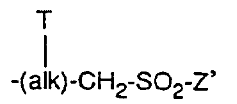

(10e),

worin Z′, alk und T die angegebenen Bedeutungen haben; alk′ unabhängig voneinander Polymethylenreste mit 2 bis 6 C-Atomen oder deren verzweigte Isomere; und m = 1 bis 6, p = 1 bis 6 und q = 1 bis 6 ist;

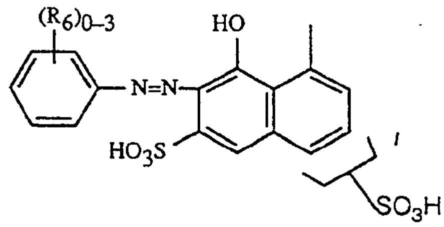

(11a)

oder

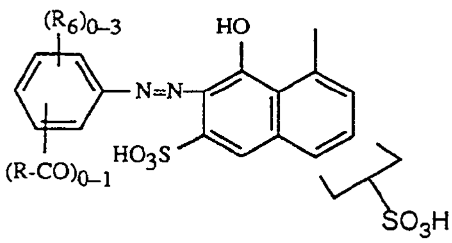

(11b),

worin $R_6$ für $C_1$-$C_4$-Alkyl, $C_1$-$C_4$-Alkoxy, Halogen, $-SO_2-Z'$, Carboxy, Sulfo und $C_1$-$C_4$-Alkoxyanilino steht; und Z′ β-Sulfatoäthyl, β-Thiosulfatoäthyl, β-Phosphatoäthyl, β-Acyloxyäthyl, β-Halogenäthyl oder Vinyl ist, und R die unter Formeln (10a) bis (10e) angegebene Bedeutung hat.

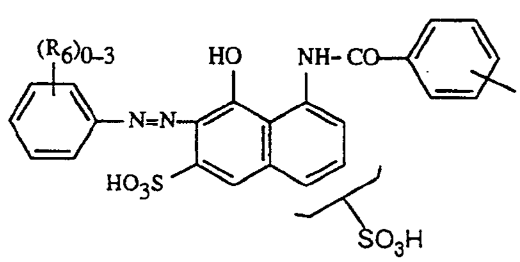

(12),

worin $R_6$ für $C_1$-$C_4$-Alkyl, $C_1$-$C_4$-Alkoxy, Halogen, $-SO_2-Z'$, Carboxy und Sulfo steht; und Z′ β-Sulfatoäthyl, β-Thiosulfatoäthyl, β-Phosphatoäthyl, β-Acyloxyäthyl, β-Halogenäthyl oder Vinyl ist.

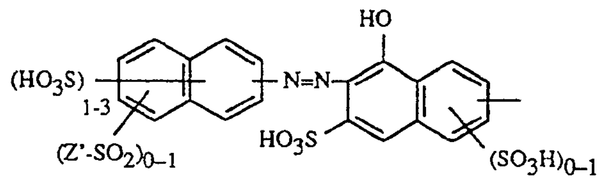

(13)

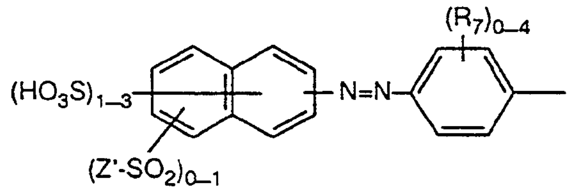

(14a)

oder

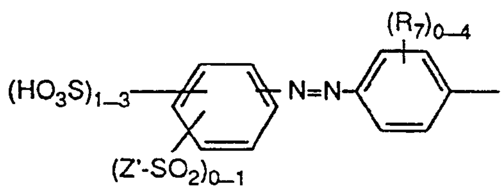

(14b)

oder

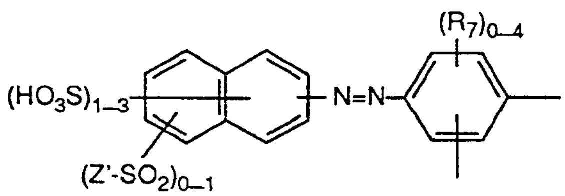

(14c)

oder

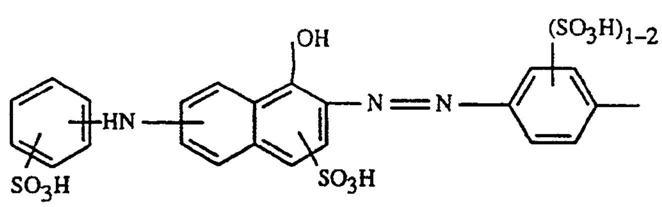

(14d),

worin $R_7$ für Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht; und Z' β-Sulfatoäthyl, β-Thiosulfatoäthyl, β-Phosphatoäthyl, β-Acyloxyäthyl, β-Halogenäthyl oder Vinyl ist.

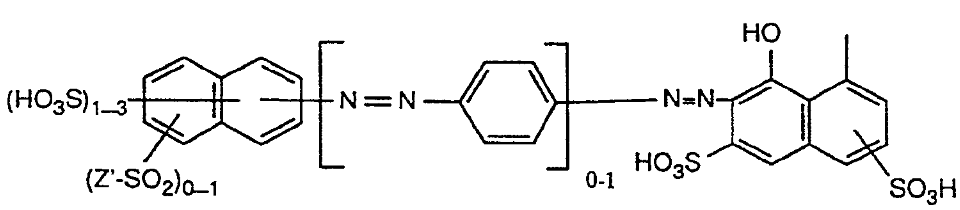

(15)

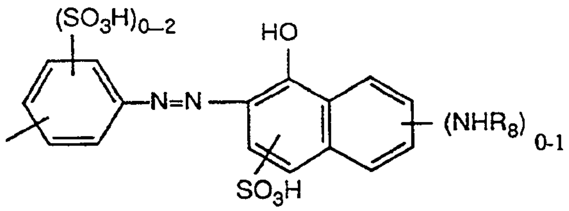

(16a)

oder

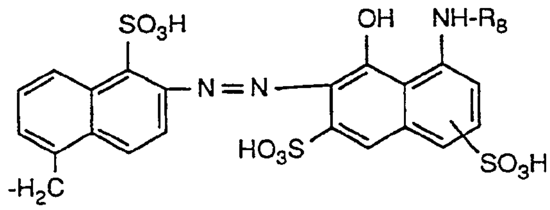

(16b),

worin $R_8$ $C_1$-$C_4$-Alkanoyl oder Benzoyl ist; und Z′ β-Sulfatoäthyl, β-Thiosulfatoäthyl, β-Phosphatoäthyl, β-Acyloxyäthyl, β-Halogenäthyl oder Vinyl ist.

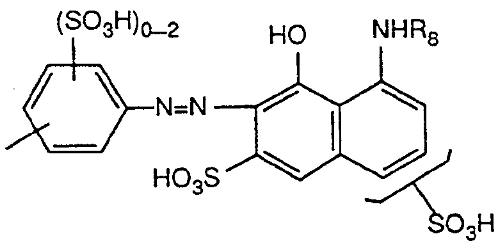

(17),

worin $R_8$ $C_1$-$C_4$-Alkanoyl oder Benzoyl ist.

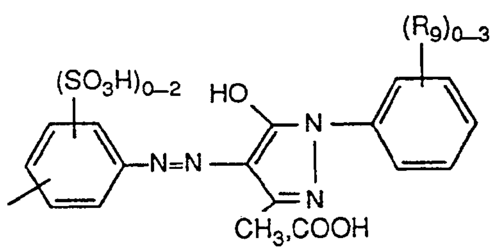

(18),

worin $R_9$ für $C_1$-$C_4$-Alkyl, $C_1$-$C_4$-Alkoxy, Halogen, $-SO_2$-Z′, Carboxy und Sulfo steht; und Z′ β-Sulfatoäthyl, β-Thiosulfatoäthyl, β-Phosphatoäthyl, β-Acyloxyäthyl, β-Halogenäthyl oder Vinyl ist.

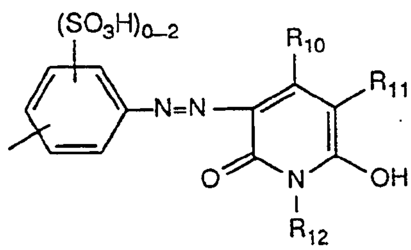

(19),

worin $R_{12}$ und $R_{10}$ unabhängig voneinander Wasserstoff, $C_1$-$C_4$-Alkyl oder Phenyl, und $R_{11}$ Wasserstoff, Cyano, Carbamoyl oder Sulfomethyl ist.

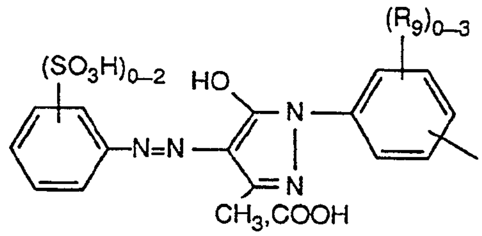

(20),

worin $R_9$ für $C_1$-$C_4$-Alkyl, $C_1$-$C_4$-Alkoxy, Halogen, $-SO_2-Z'$, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist.

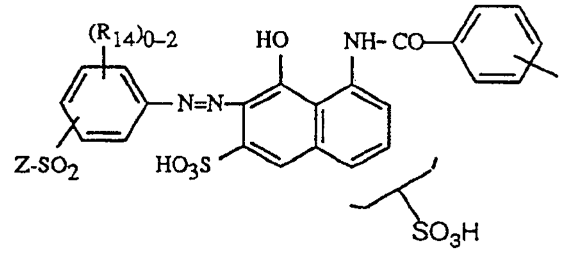

(21),

worin $R_{14}$ für $C_1$-$C_4$-Alkyl, $C_1$-$C_4$-Alkoxy, Halogen, Carboxy und Sulfo steht; und Z' β- Sulfatoäthyl, β-Thiosulfatoäthyl, β-Phosphatoäthyl, β-Acyloxyäthyl, β-Halogenäthyl oder Vinyl ist,

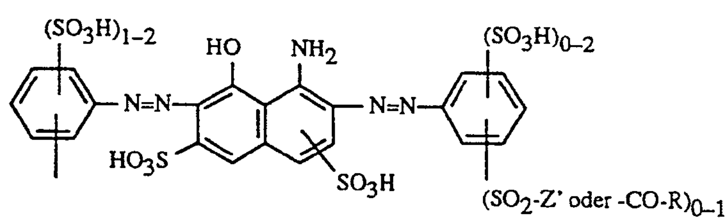

(21a)

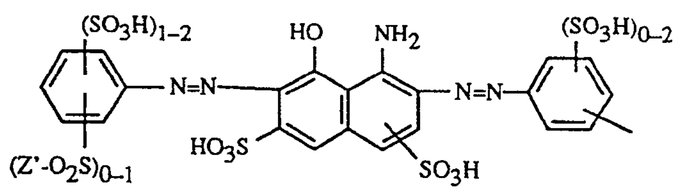

(21b)

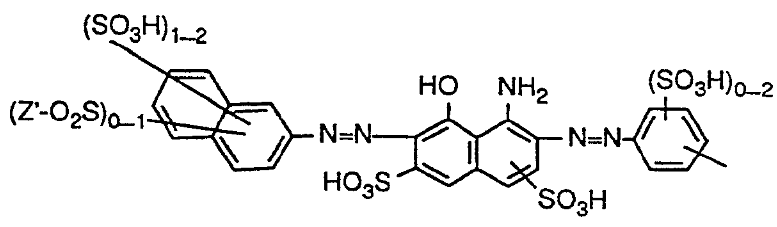

(21c)

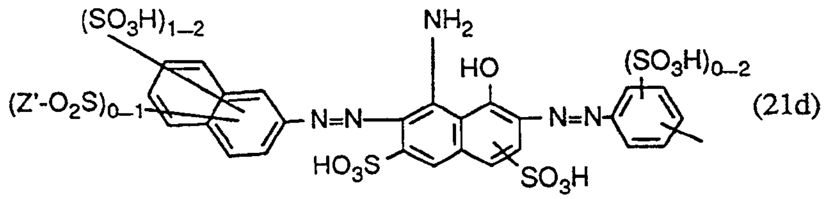

(21d)

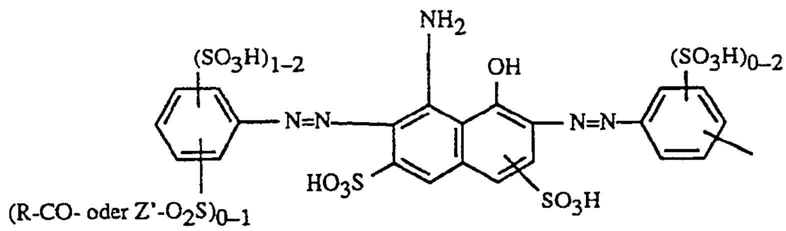

(21e)

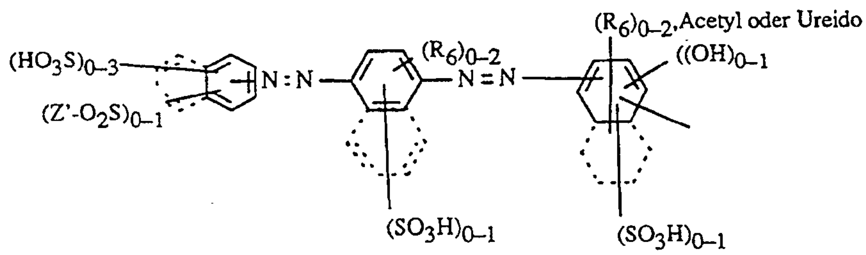

(21f),

worin $R_6$ und Z' die unter Formel (9b) angegebenen Bedeutungen haben, und R die unter Formel (10a) bis (10d) angegebene Bedeutung hat.

Besonders wichtig sind ausserdem Schwermetallkomplexe von Reaktivfarbstoffen der Formeln (1) und (2); als komplexbildende Schwermetalle kommen vor allem Kupfer, Nickel, Kobalt oder Chrom in Betracht. Bevorzugt sind Kupferkomplexazofarbstoffe, insbesondere solche der Formeln (9) und (11) bis (21), die das Kupferatom über ein Sauerstoffatom je in ortho-Position zur Azobrücke gebunden enthalten.

Beispiele für Azofarbstoffe, die sich als Metallkomplexe eignen sind:

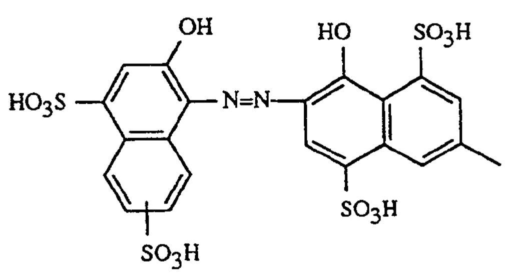

(22),

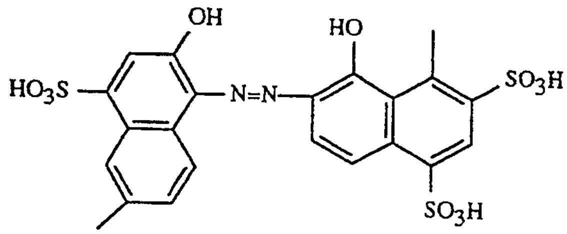

(23),

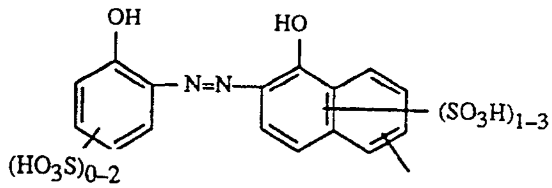

(24),

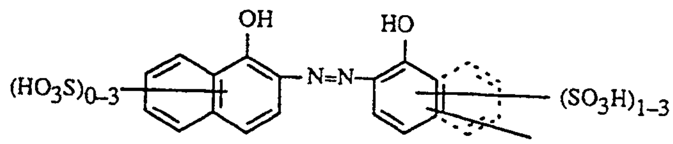

(25),

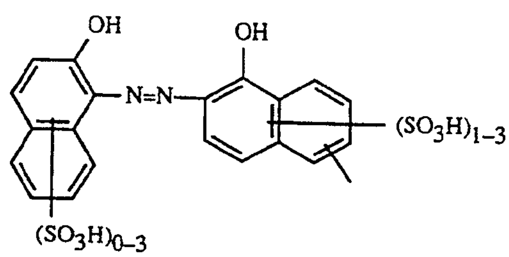

(26),

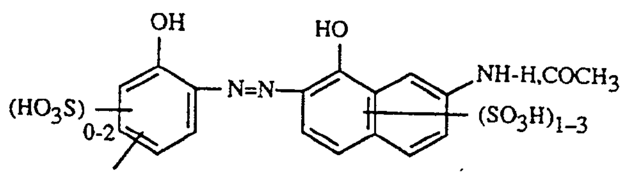

(27a)

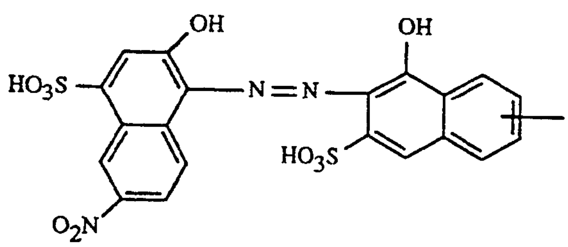

(27b)

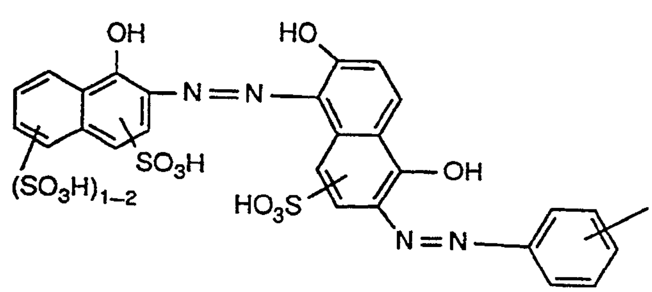

(27c).

Als Metallatome sind Cu ( 1:1-Komplex) oder Cr und Co ( 1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B.

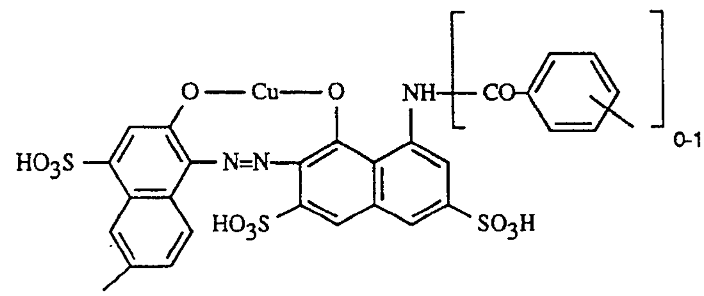

(28)

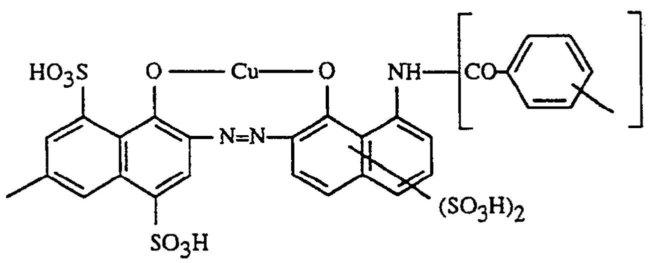

(29a)

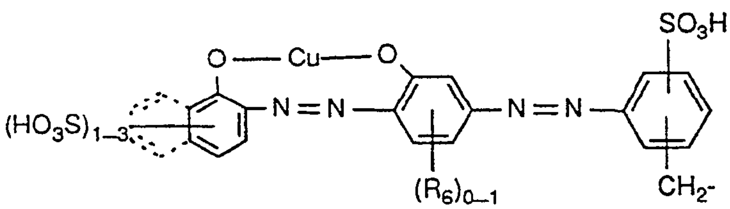

(29b)

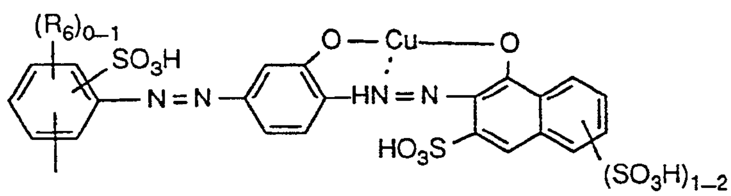

(29c),

worin $R_6$ die unter Formel (9) angegebene Bedeutung hat.

Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Ganz besonders bevorzugt ist eine Handelsform, enthaltend mindestens einen Farbstoff der Formeln

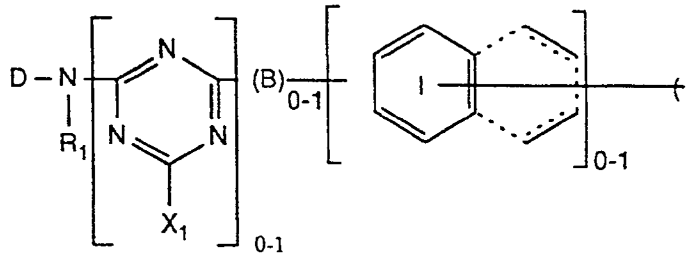

(30),

$(R\text{-}U)_n\text{—}D\text{—}(Z_1)_n$ , (31),

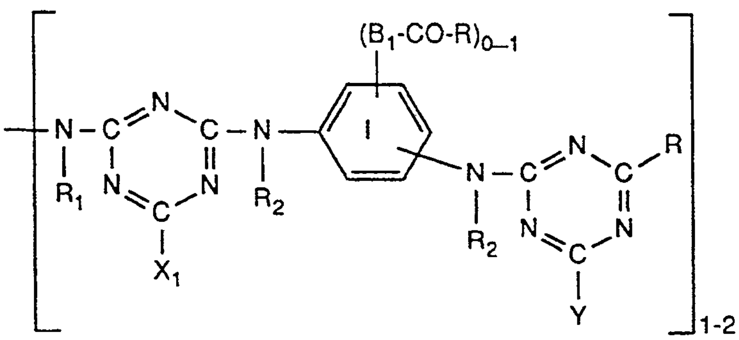

(32) und

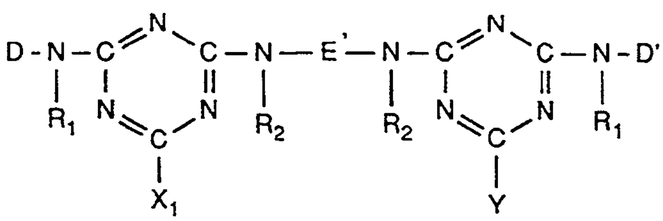

(33),

worin D und D' unabhängig voneinander jeweils der Rest eines organischen Farbstoffes der Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, insbesondere worin D und D' unabhängig voneinander ein Rest der Formel (9) oder (11) bis (21) ist, $R_1$ und $R_2$ unabhängig voneinander Wasserstoff, gegebenenfalls substituiertes $C_1$-$C_4$-Alkyl oder gegebenenfalls substituiertes Phenyl, $X_1$ und Y unabhängig voneinander Fluor,Chlor,Brom, oder ein Rest der Formeln

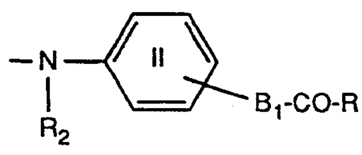

(34a) oder

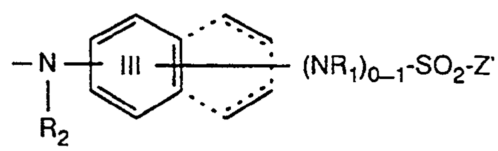

(34b),

B ein Rest der Formel 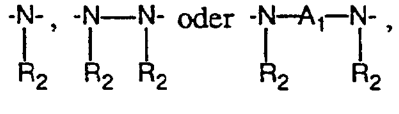 ,

$A_1$ ein aliphatisches oder aromatisches Brückenglied, wie z.B. für $A_2$ und $A_3$ angegeben, U -CO- oder $-SO_2-$,

$B_1$ die direkte Bindung,

$-(CH_2)_{1-6}-$ oder $-O-(CH_2)_{1-6}-$, $Z_1$

ein aliphatischer,aromatischer oder heterocyclischer Reaktivrest, R ein Rest der Formeln (10a) bis (10d) ist, n und n' je die Zahl 1 oder 2 ist und n+n'= 2, 3 oder 4 ist, E ein Rest der Formel

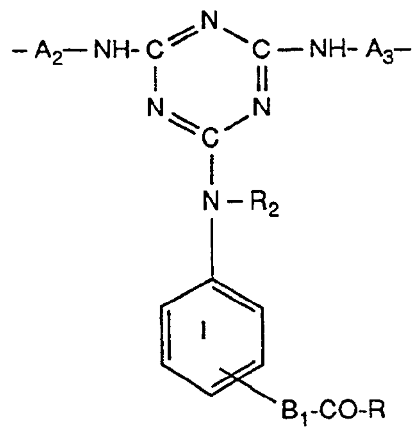

(35),

$A_2$ und $A_3$ unabhängig voneinander je ein Rest der Formel

$-(CH_2)_{1-6}-$ (36a)

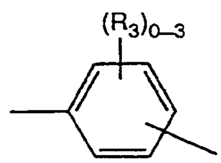

(36b)

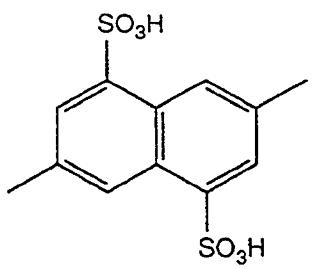

(36c) oder

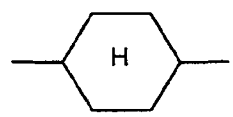

(36d);

oder
$X_1$ in Formel (33) ein Rest der Formel

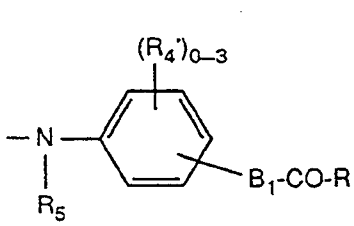

(37)

und E'ein Rest der Formel (36a), (36b), (36c) oder (36d) ist; und $R_3$ und $R_{4'}$ unabhängig voneinander für 0 bis 3 Substituenten aus der Gruppe $C_{1-4}$-Alkyl, $C_{1-4}$-Alkoxy, Halogen, Carboxy und Sulfo steht;

und die Benzolkerne I und II oder der Benzol- bzw. Naphthalinkern III unabhängig voneinander weitere Substituenten enthalten können.

Der Rest D bzw. D' in den Formeln (30) bis (33) kann an seinem Grundgerüst die bei organischen Farbstoffen üblichen Substituenten gebunden enthalten.

Als Beispiele für weitere Substituenten im Rest D bzw. D' seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D bzw. D'eine oder mehrere Sulfonsäuregruppen. Reaktivfarbstoffe der Formel (1), worin D bzw. D' der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $R_1$ und $R_2$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, $C_{1-4}$-Alkoxycarbonyl, Carboxy, Sulfamoyl, Sulfo oder Sulfato. Als Beispiele für $R_1$ und $R_2$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind $R_1$ und $R_2$ unabhängig voneinander Wasserstoff, Methyl oder Aethyl.

Vorzugsweise sind $X_1$ und Y Fluor oder Chlor.

Der Rest $B_1$ enthält 1 bis 6, vorzugsweise 1 bis 4 Kohlenstoffatome; Beispiele für $B_1$ sind: Methylen, Aethylen, Propylen, Butylen, Methylenoxy, Aethylenoxy, Propylenoxy und Butylenoxy. Falls $B_1$ einen Rest

$$-O-(CH_2)_n-$$

darstellt, ist $B_1$ durch das Sauerstoffatom an den Benzolring gebunden. Vorzugsweise ist $B_1$ eine direkte Bindung.

Als β-Halogenäthyl kommt für Z' insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent T ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_5$ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Als mögliche Substituenten der Benzolkerne I und II oder des Benzol- bzw. Naphthalinkerns III kommen z.B. die für D oder D' angegebenen Substituenten in Betracht.

Als Farbstoffe kommen insbesondere Farbstoffe der Formeln

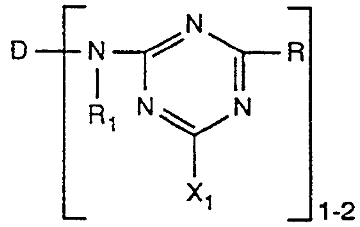

(38),

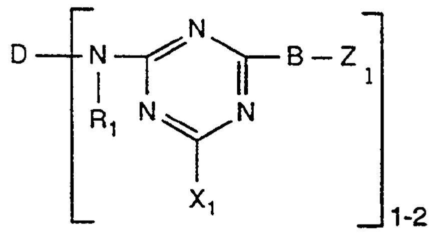

(39),

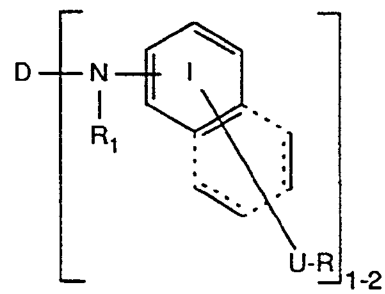

(40),

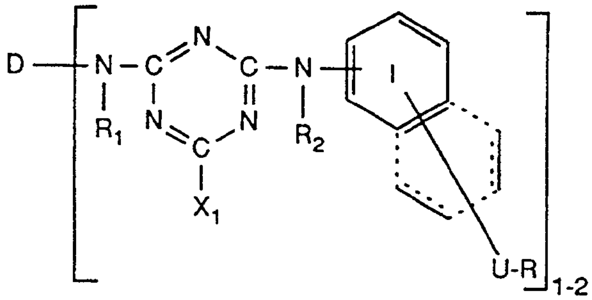

(41),

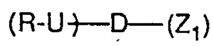

(42),

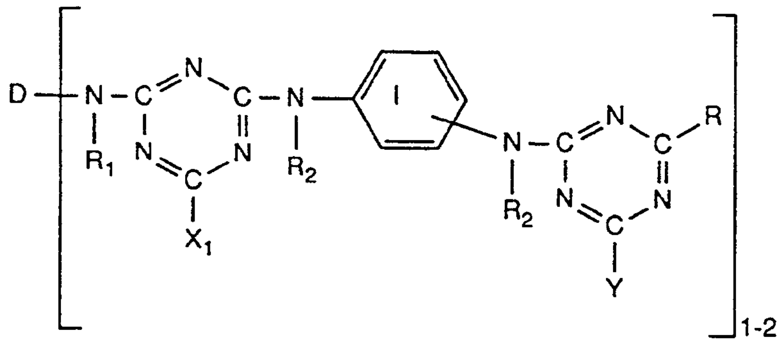

(43),

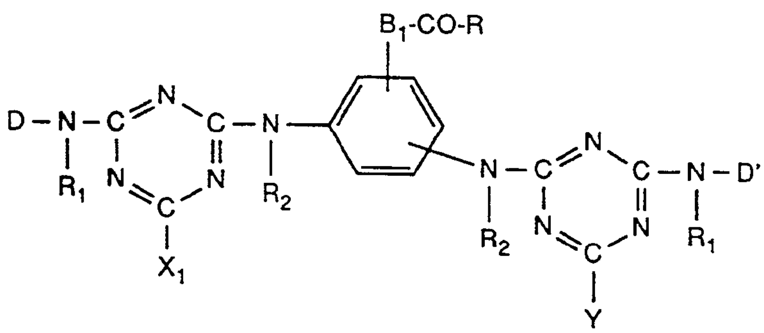

(44),

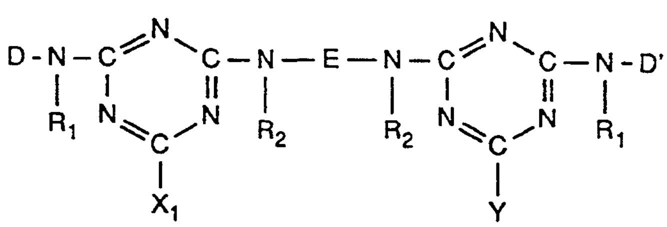

(45),

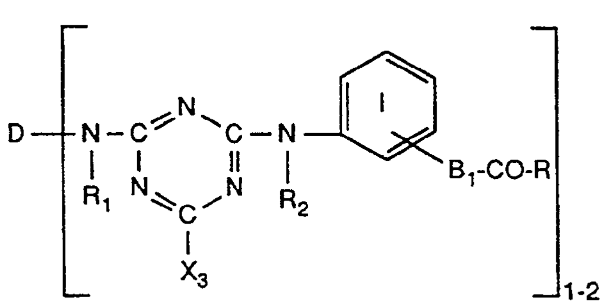

(46),

in Betracht, wobei D, D', $R_1$, $R_2$, R, B, $B_1$, E, U, $X_1$, Y, Z, $Z_1$ die angegebenen Bedeutungen haben und $X_3$ ein Rest der Formel (34a) oder (34b) ist.

Ganz besonders wichtig ist eine Handelsform enthaltend mindestens einen Farbstoff der Formel ( 12), vorzugsweise einen Farbstoff der Formel

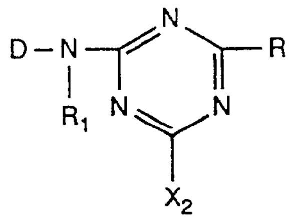

(47),

worin D, $R_1$ und R die unter Formel (38) angegebenen Bedeutungen haben und $X_2$ Fluor oder Chlor ist.

Als Beispiele für Farbstoffe der Formel (47) seien genannt:

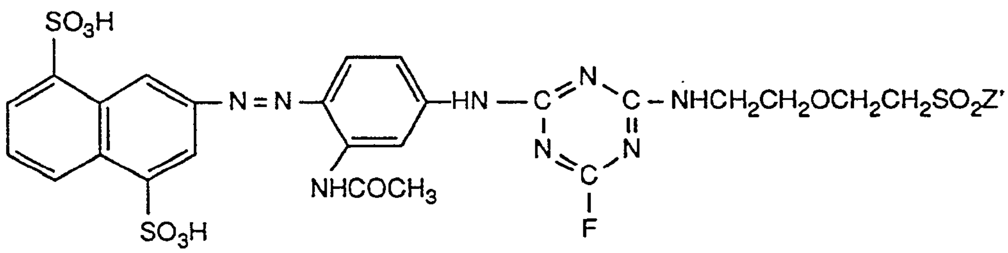

(48),

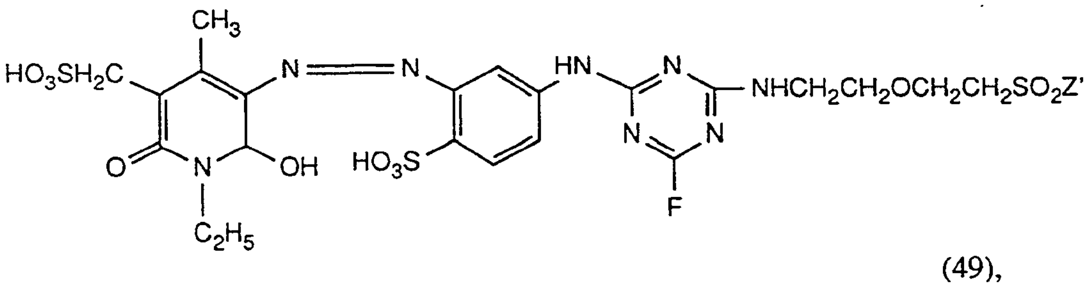

(49),

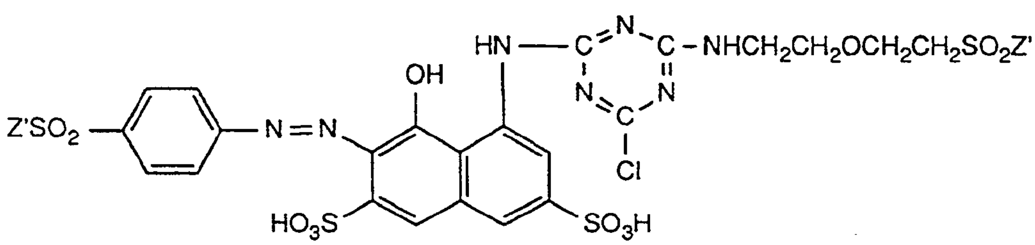

(50) und

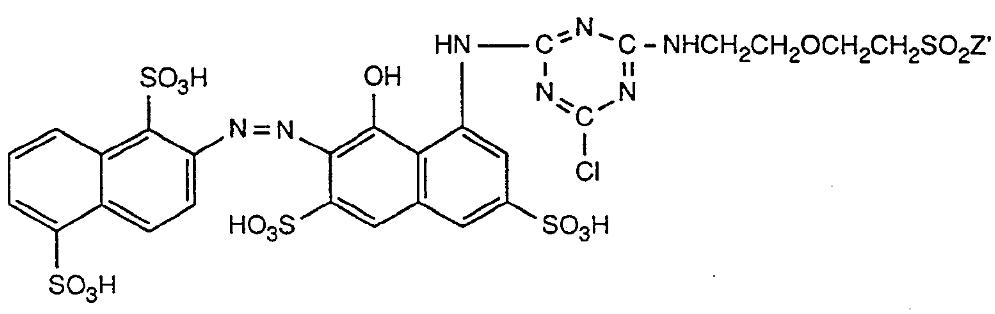

(51);

Weitere wichtige Farbstoffe entsprechen den Formeln

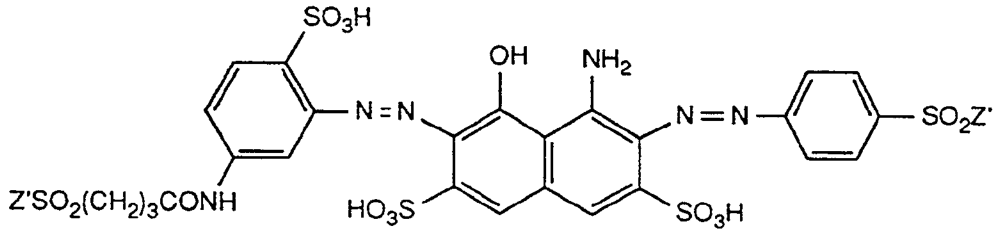

(52),

wobei Z' in den Formeln (48) bis (52) Vinyl, β-Sulfatoäthyl oder β-Chloräthyl bedeutet.

Interessante Farbstoffe der Formel ( 1 ) entsprechen der Formeln

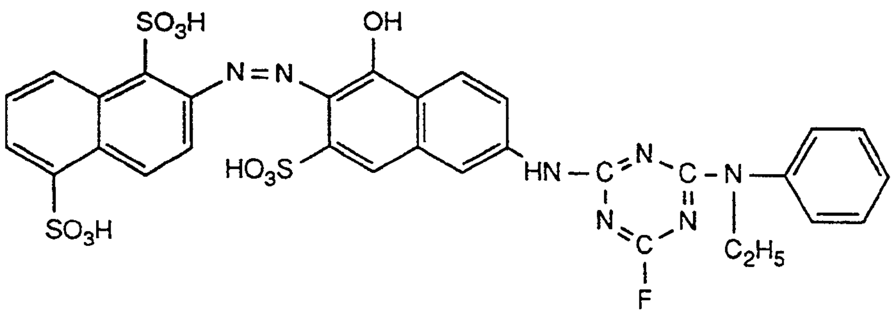

(53) und

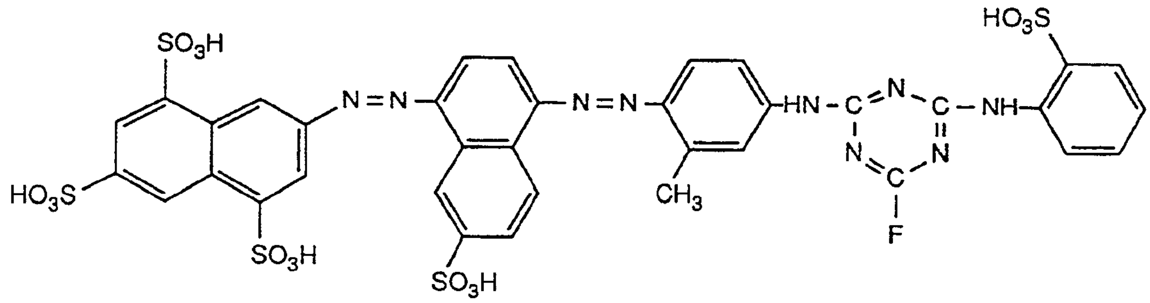

(54),

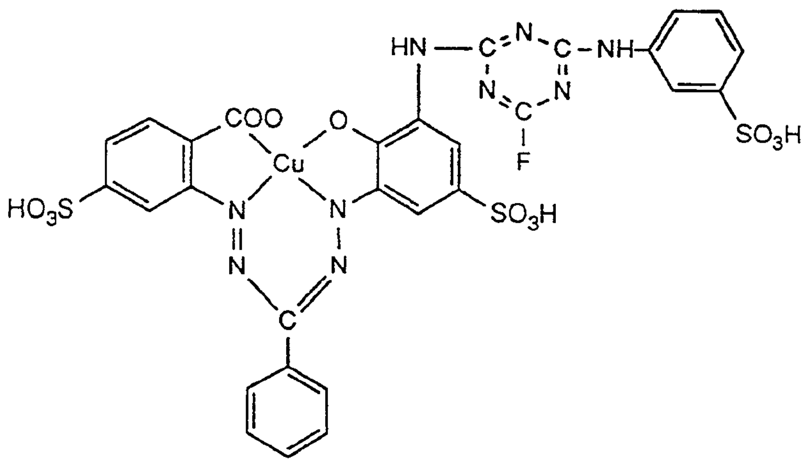

(55),

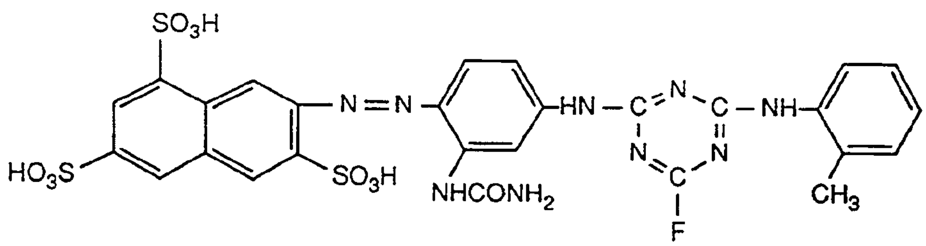

(56),

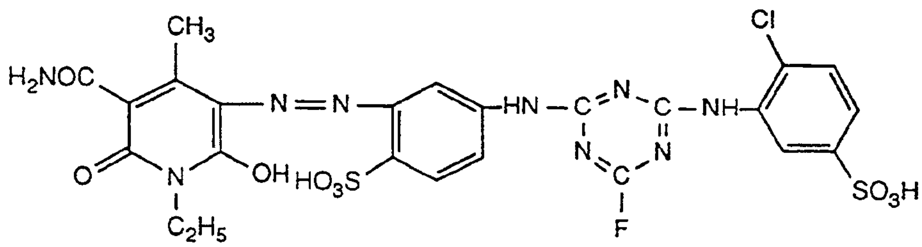

(57),

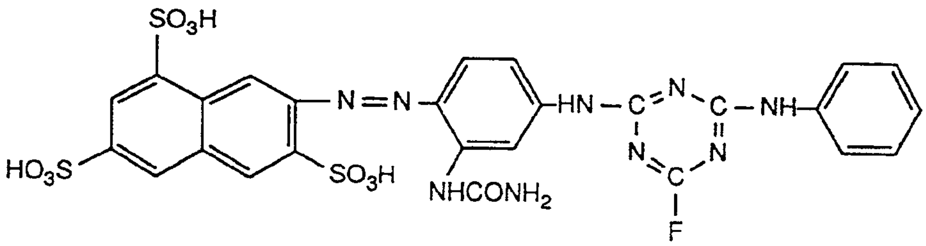

(58),

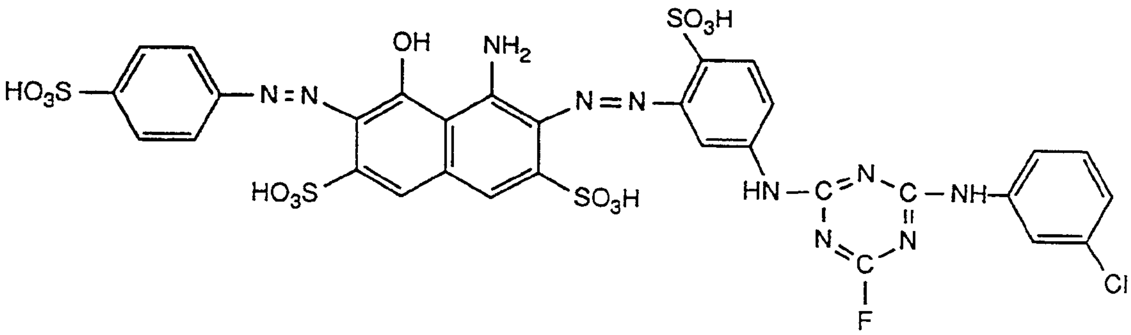

(59)

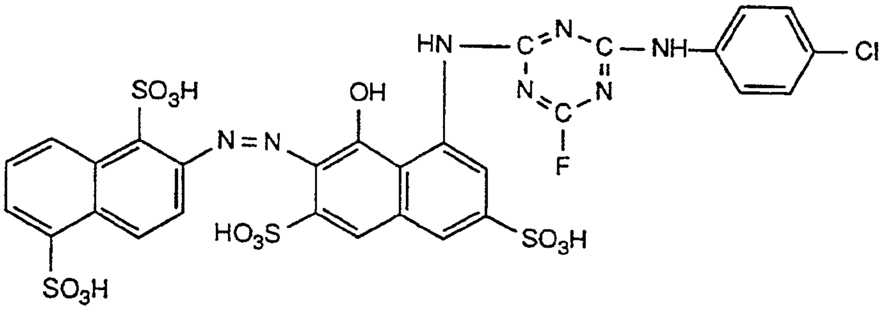

(60),

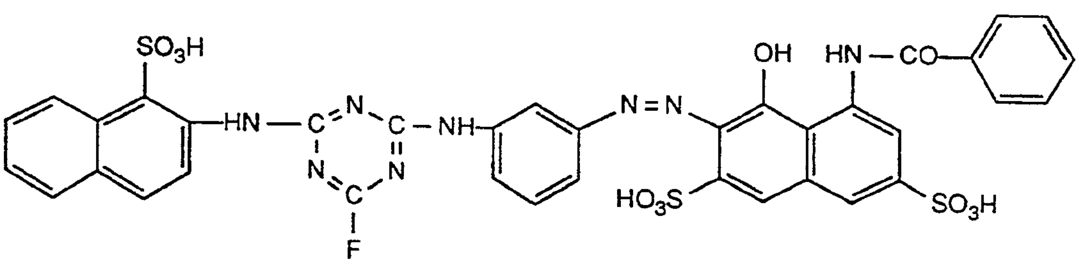

(61),

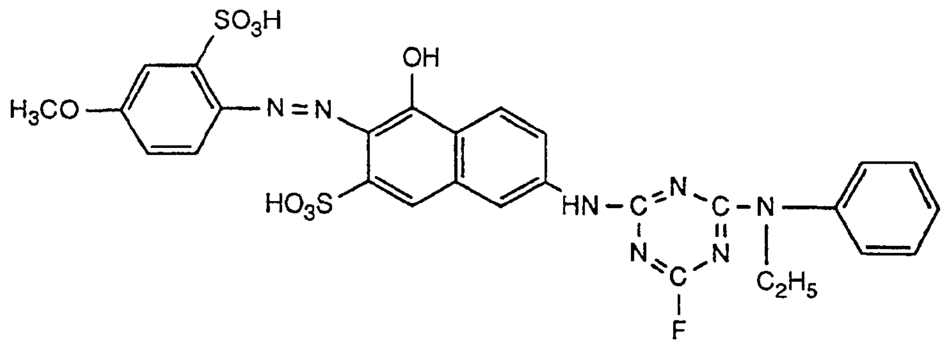

(62).

Die erfindungsgemässe Handelsform ist ferner dadurch gekennzeichnet, dass der Gehalt an Polyvinylalkohol vorzugsweise 0,2 bis 5 Gewichtsprozente, insbesondere 0,5 bis 1,5 Gewichtsprozent der eingesetzten Farbstoffmenge entspricht.

Die erfindungsgemässe Handelsform ist ferner dadurch gekennzeichnet, dass die Hülle aus Polyvinylalkohol ausser den faserreakriven Farbstoffen 0 bis 50 Gewichtsprozent, insbesondere 0 bis 30 Gewichtsprozent, vorzugsweise 0 bis 5 Gewichtsprozent, eines Coupagemittels enthält. Als Coupagemittel seien genannt: $Na_2SO_4$, NaCl, Dextrin, Dispergatoren und Füllmittel. Ferner ist es in vielen Fällen günstig der Handelsform einen pH-Puffer oder ein pH-Puffergemisch zuzusetzen. Als Beispiele kommen in Betracht: $Na_2HPO_4$, $NaH_2PO_4$, Natriumtripolyphosphat, Natriumacetat, Natriumzitrat. Vorzugsweise enthält die erfindungsgemässe Handelsform keine weiteren Zusätze.

Die erfindungsgemässe Handelsform enthält vorzugsweise teil- oder vollentsalzte Farbstoffe, z.B. mittels Umkehrosmose erhältliche Farbstoffe. Unter vollentsalzten Farbstoffen sind solche zu verstehen, die zwischen 0,05 Gewichtsprozent und 5 Gewichtsprozent Salz enthalten.

Zur Herstellung der erfindungsgemässen Handelsform wird z.B. so vorgegangen, dass der aus dem Herstellungsprozess erhältliche Rohfarbstoff aufkonzentriert und entsalzt wird, z.B. mittels Umkehrosmose, mit pH-Puffer und gegebenenfalls mit Coupagemittel versehen wird, anschliessend gegebenenfalls klärfiltriert wird, vorzugsweise über eine Mikrofiltration, dann erfolgt Trocknen und Formgebung über Zerstäuber, z.B. Düsenzerstäuber. Das erhaltene Farbstoffpulver wird über eine an sich bekannte Volumendosieranlage in eine Polyvinylalkoholfolie in Beutelform eingetragen und anschliessend verschlossen.

Die erfindungsgemässe Handelsform kann in verschiedenster Packungsgrösse hergestellt werden. So haben sich Hüllen (Beutel bzw. Säcke) aus Polyvinylalkohol mit einem Gewicht bis zu 100 kg, insbesondere bis zu 60 kg als günstig erwiesen. Hüllen mit einem Gewicht von z.B. 60 kg oder 100 kg werden vorteilhaft in einem Behälter (z.B. Karton oder Fass) abgefüllt, um das Aufreissen der Hüllen zu verhindern.

Eine besonders bevorzugte Ausführungsform der neuen Handelsform ist dadurch gekennzeichnet, dass man eine allseits verschlossene, luftarme Hülle aus Polyvinylalkohol herstellt und verwendet. Für den Herstellungsprozess der Handelsform bedeutet dies, dass vor dem Verschliessen der Polyvinylalkoholhüllen die in der Hülle vorhandene Luft herausgesaugt wird. Der Vorteil dieser Ausführungsform liegt darin, dass die Anwendung erleichtert werden kann, da die eingesetzten Polyvinylalkoholhüllen in dem wässrigen Bad gleichmässig verteilt werden können und sich nicht, bedingt durch Lufteinschluss, an der Oberfläche des Bades befinden, wodurch sich z.B. Schwierigkeiten bzw. Verzögerungen bei der Auflösung der Polyvinylalkoholhüllen ergeben können.

Mit der neuen erfindungsgemässen Handelsform lassen sich die gleichen Materialien färben oder bedrucken, wie mit den in Betracht kommenden nicht verpackten Farbstoffen. Die Verpackungen können direkt zur Herstellung der benötigten Flotten oder Druckpasten verwendet werden, ohne dass vorher die Hüllen entfernt werden. Dabei bieten sie Vorteile an, wie Einsparung von Zeit und von geschultem Personal, da keine Vortarierung nötig ist, sondern nur eine Zählung der Packungen; ferner sind sie lagerungsbeständiger als die Pulver, die sie enthalten, da deren kompaktere Masse schädigenden Umwelteinflüssen kleinere Angriffsflächen bieten als Pulver, was z.B. bei Reaktivfarbstoffen besonders wichtig sein kann. Ein sehr grosser Vorteil liegt schliesslich auch darin, dass keine Staubbelästigung auftritt.

Bei der Verwendung von Polyvinylalkohol als Hüllenmaterial ergibt sich zudem der Vorteil, dass der Zusatz von Polyvinylalkohol zum Färbebad keinen nachteiligen Einfluss auf die Färbung und deren Echtheiten hat.

Die neue Handelsform eignet sich zum Färben und Bedrucken der verschiedensten textilen Fasermaterialien, wie Seide, Wolle, Polyamidfasern und Polyurethane, und insbesondere cellulosehaltiger Fasermaterialien aller Art, sowie Leder. Solche Fasermaterialien sind beispielsweise die natürlichen Cellulosefasern, wie Baumwolle, Leinen und Hanf, sowie Zellstoff und regenerierte Cellulose. Die neue Handelsform ist auch zum

Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Das Verfahren zum Färben von textilen Fasermaterialien mit den monoreaktiven oder polyreaktiven Farbstoffen, ist dadurch gekennzeichnet, dass man eine allseitig verschlossene, insbesondere luftarme, Hüllen aus wasserlöslichem Polyvinylalkohol, enthaltend die vorgenannten monoreaktiven oder polyreaktiven Farbstoffe in ein wässriges Färbebad eintaucht und nach dem Auflösen der Hülle gleichmässig verteilt und dann ein textiles Fasermaterial in an sich bekannter Weise färbt.

Eine bevorzugte Ausführungsform zum Färben von textilen Fasermaterialien mit der erfindungsgemässen Handelsform ist dadurch gekennzeichnet, dass man die Polyvinylalkoholhüllen mit dem Farbstoffpulver in der Hälfte bis zu dreiviertel der benötigten Wassermenge quellen lässt, dann durch intensives Rühren die Hüllen und den Farbstoff bei Raumtemperatur (20 bis 25°C) bis erhöhter Temperatur (maximal 100°C) auflöst und anschliessend das restliche Wasser zum Lösen von Resten der Polyvinylalkoholhüllen hinzufügt.

Eine besonders bevorzugte Ausführungsform zum Färben von textilen Fasermaterialien mit der erfindungsgemässen Handelsform ist dadurch gekennzeichnet, dass man die Polyvinylalkoholhüllen mit dem Farbstoff in einem separaten Bad teilweise oder ganz löst und dann in ein zum Färben geeignetes Bad überführt.

Bei hohen Farbstoffkonzentrationen, wenn mehrere Polyvinylalkoholhüllen mit Farbstoff aufgelöst werden müssen, kann es vorkommen, dass einige der wasserlöslichen Hüllen untereinander verkleben und sich zu langsam bzw. unvollständig auflösen. Auch durch ein Erhitzen der Lösung kann dieser Nachteil vielfach nur ungenügend beseitigt werden. Dieser unvollständige bzw. zeitaufwendige Lösevorgang wirkt sich negativ auf den Färbeprozess aus. Durch anhaftende Farbstoffpulverreste können Konzentrationsunterschiede auftreten. Die gleichmässige Farbstoffverteilung in der Lösung kann gestört sein und dadurch ist ein gleichmässiger, reproduzierbarer Färbevorgang nicht in jedem Fall gewährleistet.

Es besteht daher der dringende Wunsch, diese Nachteile zu beseitigen. Insbesondere soll ein Verfahren zur Herstellung von Farbstofflösungen geschaffen werden, welche eine staubfreie Herstellung der Farbstofflösung erlaubt. Der in einer Hülle aus Polyvinylalkohol verpackte Farbstoff und seine Verpackung sollen rückstandsfrei aufgelöst werden. Auch soll durch das Verfahren der Aufwand für die Reinigung der Aufbereitungsvorrichtung deutlich reduziert werden und Abwässer weitgehend vermieden werden.

Gegenstand der vorliegenden Erfindung ist ferner ein Verfahren zur Herstellung von Farbstofflösungen aus den erfindungsgemässen Handelsformen bei dem entsprechend einer gewünschten Lösungsmenge mit bestimmter Farbstoffkonzentration eine Menge eines pulverförmigen Farbstoffes (C) in einer bestimmten Menge eines Lösungsmittels (S), insbesondere in Wasser, aufgelöst wird, dadurch gekennzeichnet, dass der pulverförmige, wasserlösliche monoreaktive Farbstoff (C), welcher einen Monofluor-s-triazinrest enthält, und/oder mindestens ein wasserlöslicher polyreaktiver Farbstoff (C) in einer Hülle aus Polyvinylalkohol (B) in einen Aufbereitungsbehälter (1) eingebracht wird, dass die gesamte Farbstoffmenge mit etwa 1/3 - 2/3 der Lösungsmittelmenge in den Aufbereitungsbehälter (1) vermengt wird, dass das Farbstoff-Lösungsmittelgemisch so lange in einem mit dem Aufbereitungsbehälter ( 1 ) verbundenen Leitungssystem (3) von einer Umwälzpumpe (2) im Kreis gepumpt wird, bis der Farbstoff (C) vollständig gelöst ist, dass diese erste Lösung in einem Auffangtank (6) umgepumpt wird, der über eine Dreiwegventileinrichtung (4) mit dem Leitungssystem (3) in Verbindung steht, und dass die restliche Lösungsmittelmenge in dem Leitungssystem (3) und dem Aufbereitungsbehälter (1) umgepumpt wird, um diese zu reinigen, bevor sie zur Einstellung der gewünschten Farbstoffkonzentration der Farbstofflösung in den Auffangtank (6) geleitet und mit der ersten Lösung vermischt wird.

Bevorzugte Ausführungsformen des erfindungsgemässen Verfahrens sind dadurch gekennzeichnet, dass

a) die den Farbstoff enthaltenden Polyvinylalkoholhüllen (B) automatisch oder manuell in den Aufbereitungsbehälter ( 1 ) eingebracht werden;

b) als Umwälzpumpe (2) eine Zerkleinerungspumpe verwendet wird;

c)das Farbstoff-Lösungsmittelgemisch etwa tangential und unter einem Winkel $\alpha$ von maximal etwa 45° zur Flüssigkeitsoberfläche aus dem Leitungssystem (3) in den oberen Bereich des Aufbereitungsbehälters ( 1 ) eingebracht wird.

d) das Farbstoff-Lösungsmittelgemisch an der niveaumässig tiefsten Stelle des Aufbereitungsbehälters ( 1 ) abgesaugt
wird;

e) die Farbstoffzugabe (C), die Lösungsmittelzufuhr (S), die Farbstoffkonzentration, sowie die Umwälzpumpe (2) und im Leitungssystem (3) angeordetes Steuerventil (4) mit Hilfe einer Steuereinheit ( 11 ) überwacht und geregelt werden.

Im folgenden wird die Erfindung anhand der beispielsweisen Zeichnungen näher erläutert. Es zeigen in zum Teil schematisierter Darstellung:

Fig. 1 ein erstes Ausführungsbeispiel einer Vorrichtung für das erfindungsgemässe Verfahren,

Fig. 2 den Bereich der in Fig. 1 mit 8 bezeichneten Abflussöffnung in grösserem Massstab.

Die in Fig. 1 beispielsweise dargestellte Vorrichtung zur Durchführung des erfindungsgemässen Verfahrens umfasst einen vorzugsweise zylindrischen Aufbereitungsbehälter 1 der mit einem abnehmbaren Deckel 10 verschliessbar ist. Der Boden des Aufbereitungsbehälters 1 ist etwa konisch zusammenlaufend ausgebildet. An der tiefsten Stelle des Behälters 1 ist eine Abflussöffung 8 vorgesehen, die in ein Leitungssystem 3 mündet. Ueber der Abflussöffnung 8 ist ein mit Durchflussöffnungen versehenes Abdeckelement 7 im Behälter 1 angebracht. Vorzugsweise ist das Abdeckelement 7 als Dreibein mit nach oben orientierter Spitze ausgebildet, wie in Fig. 2 dargestellt. Das Leitungssystem 3 endet im oberen Bereich des Aufbereitungsbehälters 1, sodass auf diese Weise ein geschlossener Kreislauf Aufbereitungsbehälter 1 - Leitungssystem 3-Aufbereitungsbehälter 1 vorliegt. Im Anschluss an den Aufbereitungsbehälter 1 ist eine Umwälzpumpe 2 in das Leitungssystem 3 integriert. Im dargestellten Ausführungsbeispiel ist die Umwälzpumpe 2 vorzugsweise als Zerkleinerungspumpe ausgebildet. Im Anschluss an die Umwälzpumpe 2 ist eine Konzentrationsmesseinrichtung 26 im Leitungssystem vorgesehen. Von einem ebenfalls im Leitungssystem 3 vorgesehenen Dreiwegventil 4 führt eine Abzweigleitung 5 gegebenenfalls über ein in der Abzweigleitung 5 angeordnetes Sieb zu einem Auffangbehälter 6. Die Einmündung 9 des Leitungssystems 3 im oberen Bereich des Aufbereitungsbehälters 1 verläuft idealerweise etwa tangential entlang der Seitenwand des Behälters. Vorzugsweise ist sie unter einem Winkel $\alpha$ von maximal etwa 45° zur Waagrechten geneigt. Die Umwälzpumpe 2, die Konzentrationsmesseinrichtung 26 und die Dreiwegventileinrichtung 4 sind vorzugsweise mit einer Steuereinheit 11 über Steuerleitungen 27, 28 bzw. 29 verbunden. Die Steuereinheit 11 überwacht und regelt den Betrieb der Pumpe 2 und des Ventils 4. Zugleich ist sie auch mit einer Lösungsmittelquelle 14 verbunden und versorgt das Aufbereitungsgefäss über eine mit dem Aufbereitungsbehälter 1 verbundene Versorgungsleitung 12 mit Lösungsmittel S, vorzugsweise mit Wasser. Zweckmässigerweise ist auch die Mündung der Versorgungsleitung 12 etwa tangential in der Behälterwand angeordnet und gegen die Waagrechte geneigt. In der Versorgungsleitung 12 ist ein Durchflusszähler 13 angeordnet, der der Steuereinheit die erforderlichen Messdaten über die Lösungsmittelmenge übermittelt. Im Auffangbehälter 6 kann auch noch, wie dargestellt, ein Rührwerk 15 angeordnet sein, welches gleichfalls über eine Steuerleitung 30 mit der Steuereinheit 11 verbunden ist und derart überwacht und geregelt wird.

Zur Erstellung einer Farbstofflösung einer bestimmten Farbstoffkonzentration wird entsprechend der gewünschten Menge über die Versorgungsleitung 12 Lösungsmittel S, vorzugsweise Wasser, in den Aufbereitungsbehälter 1 eingefüllt. Dabei wird darauf geachtet, dass vorerst nur 1/3 - 2/3 der Lösungsmittelmenge in den Aufbereitungsbehälter 1 eingefüllt werden. Nach dem manuellen oder auch automatischen Abheben des Deckels 10 wird die gesamte erforderliche Menge des pulverförmigen Farbstoffes C in Polyvinylalkoholhüllen B zugegeben. Beispielsweise können Hüllen mit 1/2, 1, 3 und mehr kg Farbstoffpulver vorliegen. Die erforderliche Anzahl Farbstoffhüllen wird manuell oder automatisch in den Aufbereitungsbehälter 1 eingebracht, und der Behälter 1 wieder mit seinem Deckel 10 verschlossen. Durch Aktivieren der Umwälzpumpe 2 wird das Lösungsmittel L durch die Abflussöffnung 8 aus dem Aufbereitungsbehälter 1 in das Leitungssystem 3 gesaugt und an der Eintrittsöffnung 9 wieder in den Aufbereitungsbehälter 1 eingebracht. Durch die tangentiale Anordnung der Mündung 9 an der Seitenwandung des Behälters 1 wird das Lösungsmittel L tangential eingebracht und erzeugt derart in der Lösungsmittelmenge im Aufbereitungsbehälter 1 eine Kreisströmung. Durch die Neigung der Mündung 9 gegenüber der Waagrechten in einem Winkel $\alpha$ von maximal etwa 45° wird der Lösungsmittelmenge zusätzlich zum Drehmoment auch ein vertikal in Richtung des Behälterbodens gerichteter Impuls erteilt. Auf diese Weise kommt es zu einer sehr guten Durchmischung des im Behälter 1 befindlichen Lösungsmittels L. Die Farbstoffhüllen B lösen sich langsam in dem Lösungsmittel L auf und geben das Farbstoffpulver C frei. Das als vorzugsweise spitz zulaufendes Dreibein ausgebildete Abdeckelement 7 verhindert, dass die Hüllen die Austrittsöffnung 8 verstopfen. Die spitze Ausbildung des Dreibeins hat den Vorteil, dass die in den Behälter 1 eingeworfenen Farbstoffhüllen B daran aufgerissen werden, und auf diese Weise das Farbstoffpulver C schneller freigegeben wird. Das Farbstoffpulver-Lösungsmittelgemisch wird solange im Kreislauf gepumpt, bis das Pulver C vollständig gelöst ist. Durch die Abflussöffnung 8 mitabgesaugte ungelöste Hüllenreste werden in der als Zerkleinerungspumpe wirksamen Umwälzpumpe in kleine Stücke gerissen, welche daraufhin viel leichter aufgelöst werden können. Mit Hilfe der Konzentrationsmesseinrichtung 26 kann die Farbstoffkonzentration in der ersten Lösung bestimmt werden. Die Messwerte werden an die Steuereinheit 11 weitergeleitet. Wird die der eingesetzten Farbstoff- und Lösungsmittelmenge entsprechende Konzentration erreicht, so zeigt die Konzentrationsmesseinrichtung die vollständige Auflösung des Farbstoffpulvers C und der auflösbaren Polyvinylalkoholhüllen B an; das Dreiwegventil 4 wird betätigt und die erste Lösung wird über die Abzweigleitung 5 in den Auffangbehälter 6 gepumpt. Mit Hilfe des im Auffangbehälter angeordneten Rührwerkes 15 wird die erste Farbstofflösung noch weiter homogenisiert. Nun wird die restliche Lösungsmittelmenge in den Aufbereitungsbehälter 1 eingebracht und nach Umschalten der Dreiwegventileinrichtung 4 im Leitungssytem 3 und dem Behälter 1 zirkuliert. Auf diese Weise wird das restliche Lösungsmittel als Reinigungsmittel verwendet. Der Reinigungsprozess wird mit Hilfe der Konzentrationsmesseinrichtung 26 überwacht. Verändern sich die Konzentrations-Messwerte nicht mehr oder nur mehr unwesentlich, wird die Dreiwegventileinrichtung 4 wieder auf Durchgang in die Zweigleitung 5 geschaltet. Der mit Farbstofflösungsresten versetzte Lösungsmittelrest wird sodann über die Zweigleitung 5 in den Auffangbehälter 6 eingebracht und dort mit der ersten Lösung vermischt um die gewünschte Menge an Farbstofflösung in der gewünschten Konzentration zu erstellen.

Das erfindungsgemässe Verfahren und die Vorrichtung erlauben eine weitgehend staubfreie Verarbeitung der erfindungsgemässen Handelsform.Die Vorrichtung zur Erstellung von Farbstofflösungen wird mit einem Teil des benötigten Lösungsmittels S gereinigt. Das daraus resultierende verunreinigte Lösungsmittel wird zur Einstellung der gewünschten Farbstoffkonzentration verwendet und fällt nicht als Abwasser an, das entsorgt werden muss. Bei der anhand Fig. 1 erläuterten Ausführungsvariante wird der pulverförmige Farbstoff C in Form von Polyvinylalkoholhüllen B zugegeben. Der Farbstoff C und das Hüllenmaterial, ein Polyvinylalkohol, wird vollständig aufgelöst, es verbleiben keine mit geringen Mengen Farbstoffpulver verunreinigten Ueberreste. Die anhand der in Fig. 1 beispielsweise erläuterte Verfahrensführung eignet sich für Reaktivfarbstoffe, insbesondere für hochreaktive Farbstoffe sehr gut. Derartige Farbstoffe sind beispielsweise die bei der erfindungsgemässen Handelsform genannten Farbstoffe. Für die in dem erfindungsgemässen Verfahren eingesetzten Farbstoffe gelten die gleichen Bevorzugungen wie für die erfindungsgemässe Handelsform angegeben.

Weitere interessante Ausführungsformen des erfindungsgemässen Verfahrens zum Färben textiler Fasermaterialien mit der erfindungsgemässen Handelsform, insbesondere zum Trichromie-Färben, sind dadurch gekennzeichnet, dass man die farbstoffhaltigen Hüllen aus Polyvinylalkohol dem Färbebad bzw. der Färbeflotte nicht direkt zuführt, sondern Stammlösungen herstellt, z.B. gemäss dem erfindungsgemässen Verfahren zur Herstellung einer Farbstofflösung und diese Stammlösung dem Färbebad, der Färbeflotte, der Druckpaste oder einem vorgeschalteten Vorratsgefäss zuführt. Als Stammlösung ist beispielsweise eine wässrige Lösung zu verstehen, die 1 bis 30, insbesondere 10 bis 15, Gewichtsprozent Farbstoff enthält. Mit einer Stammlösung ist eine sehr feine Dosierung der Farbstoffe möglich. Bei kontinuierlichen Färbeverfahren, z.B. beim Foulardieren, ist es vorteilhaft Stammlösungen herzustellen, gegebenenfalls verschiedene Stammlösungen in einem Vorratsgefäss zu mischen und mit dieser Mischung, die noch weitere übliche Zusätze enthalten kann, die Flottenlösung zu ergänzen. Ein weiterer Vorteil bei der Verwendung von Stammlösungen ist, dass man mit wenigen Packungsgrössen auskommt. Je nach Bedarf kann ein Teil der benötigten Farbstoffmenge in Form von Polyvinylalkoholhüllen dem Färbebad, z.B. beim Ausziehfärben, zugegeben werden und der Rest der benötigten Farbstoffmenge kann in Form einer Stammlösung dem Färbebad zugegeben werden.

Die in der erfindungsgemässen Handelsform verwendeten Farbstoffe liegen entweder in der Form ihrer freien Säuren oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1:

Der Farbstoff der Formel

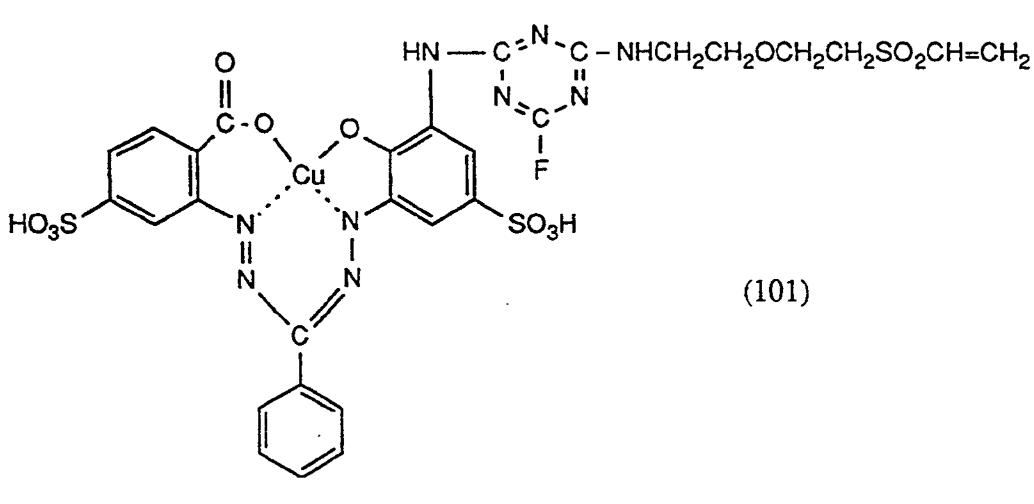

(101)

wird wie in der EP-A-333 656, Beispiel 83 beschrieben, entsalzt, aufkonzentriert und durch Zerstäubungstrocknung ein körniges Pulver hergestellt. Anschliessend wird das Pulver durch Heissiegeln in Beutel, die aus einer 35 µm dicken wasserlöslichen Hülle aus Polyvinylalkohol bestehen, verpackt, wobei vor dem Heissiegeln die Beutel durch Absaugen luftarm gehalten werden. Es werden 100 g-, 500 g-, 1 kg-, 2 kg-, 4 kg- und 20 kg-Beutel hergestellt, die 0,5 bis 1,5 Gewichtsprozent Polyvinylalkohol und 98,5 bis 99,5 Gewichtsprozent Farbstoff enthalten.

Zur Herstellung von Färbebädern lassen sich die erhaltenen Farbstoffbeutel direkt in Wasser lösen, ohne dass die Polyvinylalkoholhülle entfernt oder durch spezielle Massnahmen in Lösung gebracht wird. Mit den so hergestellten Bädern kann man gegebenenfalls nach Zugabe der sonst erwünschten Färbereihilfsmittel Baumwolle nach an sich bekannter Methode in echten Blautönen färben.

Wenn man anstelle des Farbstoffs der Formel (101) einen der folgenden Farbstoffe in Beutel aus Polyvinylalkoholhüllen packt, erhält man ebenfalls Farbstoffbeutel, die sich direkt in Wasser lösen und Baumwolle in dem angegebenen Farbton färben.

| Farbstoff | Farbton |
|---|---|
| 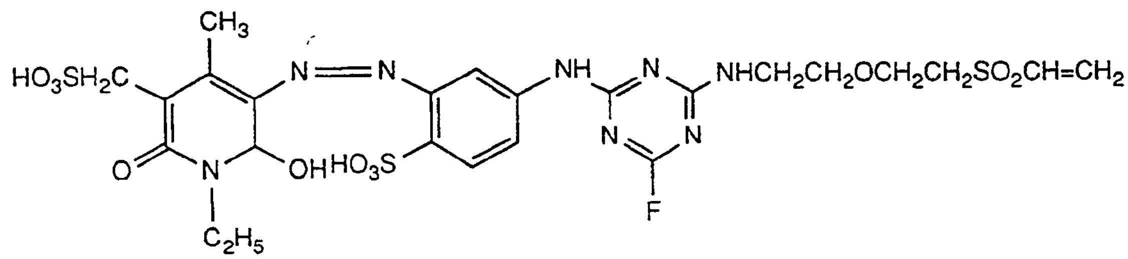 | |

(102) gelb

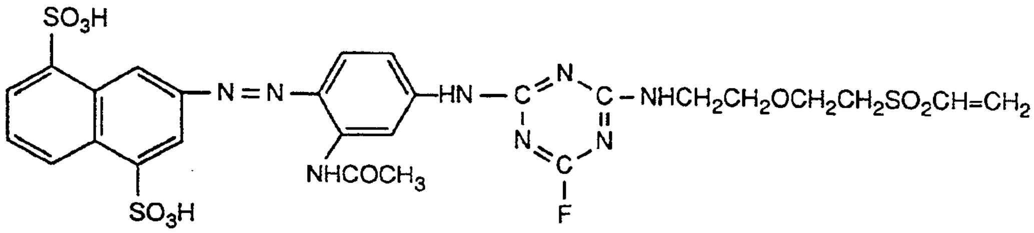

(103) gelb

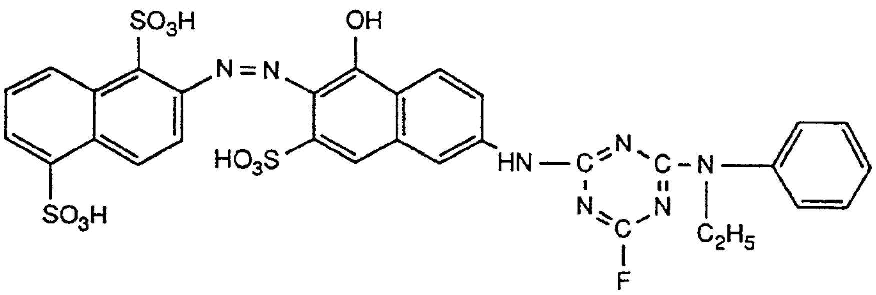

(104) orange

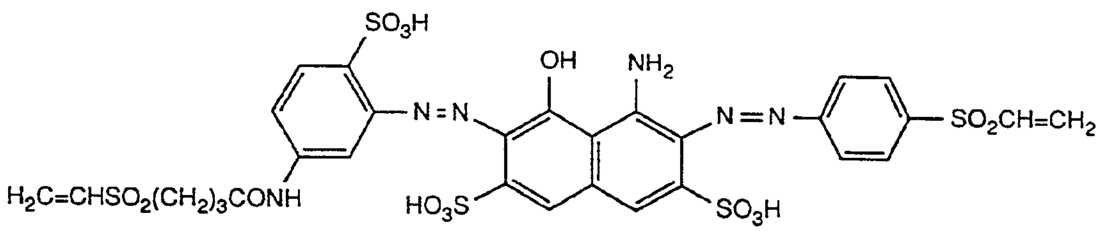

(105) marineblau

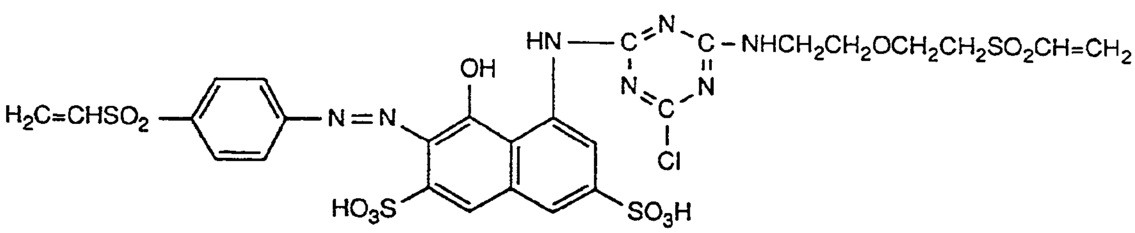

(106) rot

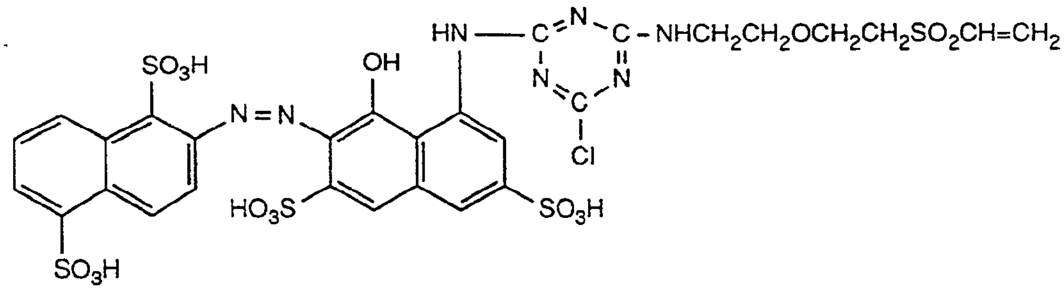

(107) rot

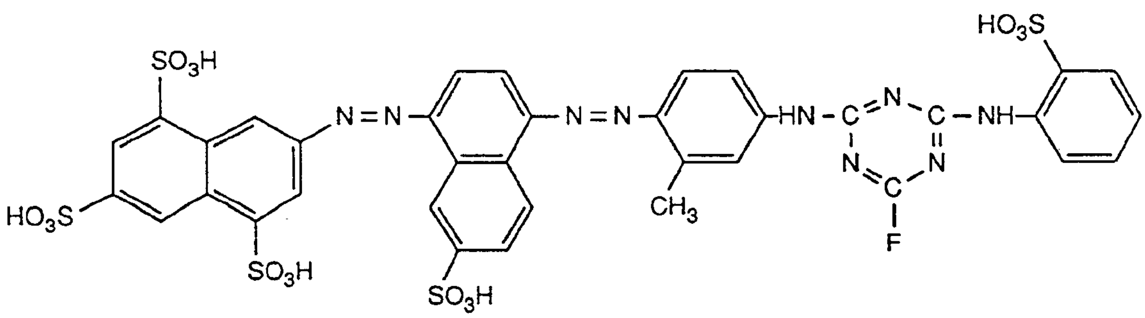

(108) braun

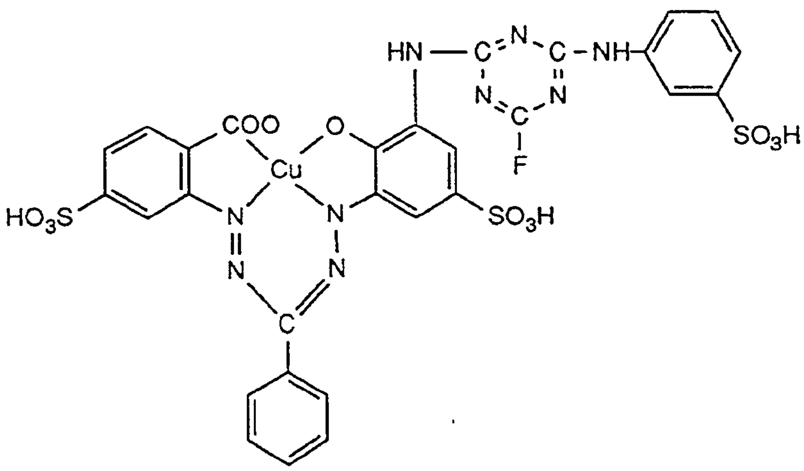

(109)

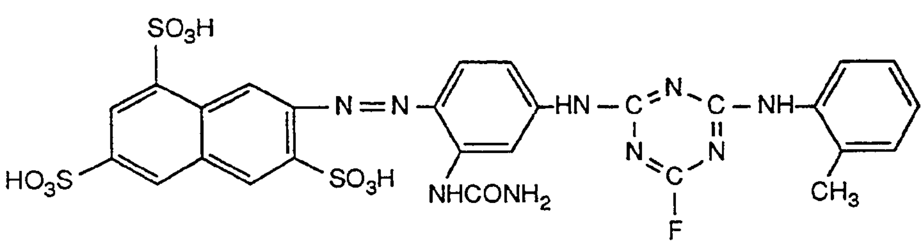

(110)

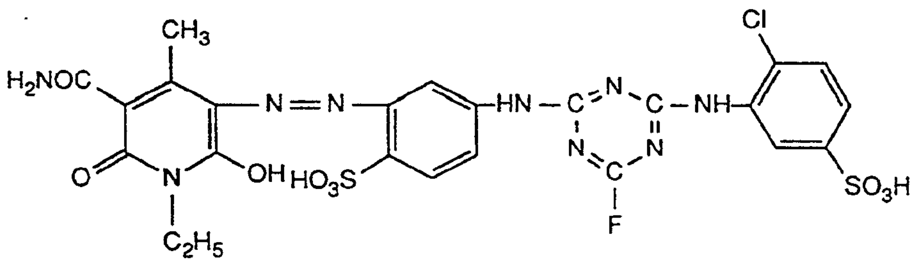

(111)

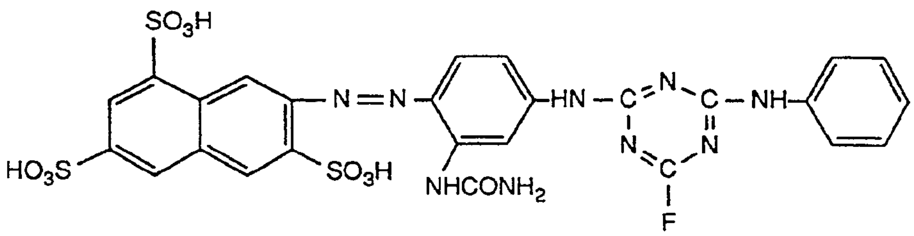

(112)

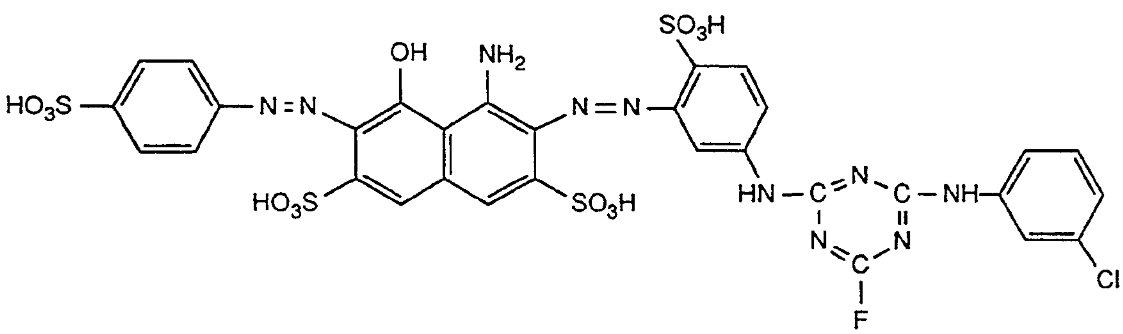

(113)

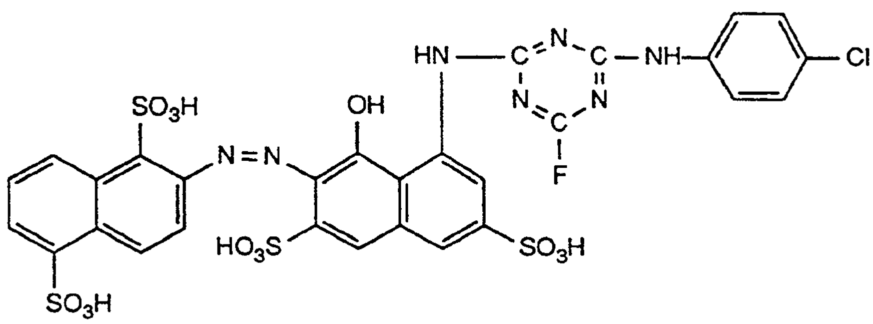

(114)

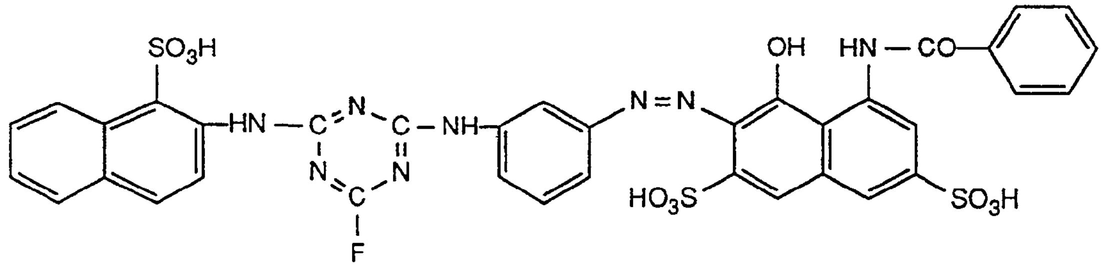

(115)

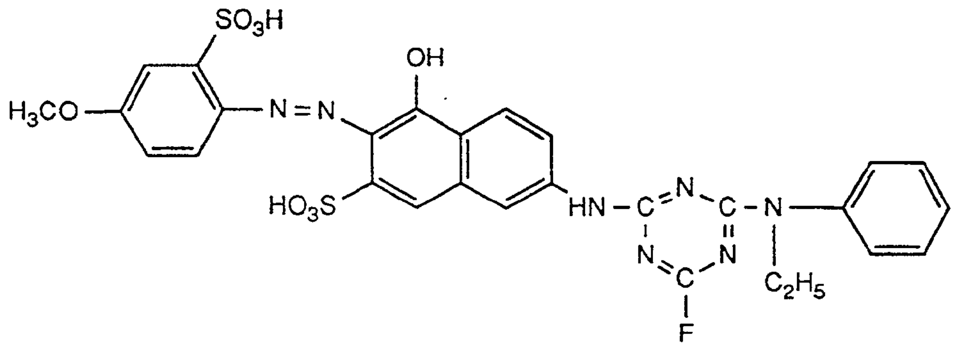

(116)

Beispiel 2:

Ein gebleichtes Baumwoll-Cretonne Gewebe wird auf dem Foulard mit einem Abquetscheffekt von 70 % Flottenaufnahme imprägniert mit einer Klotzflotte nachstehender Zusammensetzung:

Je 100 l Flottenlösung:

1 Beutel zu 100 g des gemäss Beispiel 1 verpackten Farbstoffs der Formel (103),

1 Beutel zu 500 g des gemäss Beispiel 1 verpackten Farbstoffs der Formel (107), und

8 Beutel zu 100 g des gemäss Beispiel 1 verpackten Farbstoffes der Formel (101),

1000 g eines Verdickungsmittels,

100 g eines Netzmittels, und

200 g des Natriumsalzes der m-Nitrobenzolsulfonsäure.

Die Tauchzeit beträgt 2 Sekunden.

Nach dem Foulardieren wird das Baumwoll-Cretonne-Gewebe während einer Minute bei 100°C getrocknet, foulardiert mit einer Flotte enthaltend 250 g/l NaCl und 10 ml/l 30%ige NaOH mit einem Abquetscheffekt von ca. 80 % und dann während einer Minute im Sattdampf bei 101 bis 103° fixiert.

Danach wird das Baumwoll-Cretonne-Gewebe zunächst mit kaltem Wasser und dann mit heissem bis kochendem Wasser gespült, kochend mit 1 bis 2 g/l eines Waschmittels geseift, erneut mit heissem und dann mit kaltem Wasser gespült und danach getrocknet.

Man erhält eine egale, endengleiche olive Färbung mit guten Echtheiten.

Beispiel 3:

Ein gebleichtes, mercerisiertes Baumwoll-Cretonne-Gewebe wird auf dem Foulard mit einem Abquetscheffekt von 70 % Flottenaufnahme imprägniert mit einer Klotzflotte nachstehender Zusammensetzung:

Je 100 l Flottenlösung:

2 Beutel zu 500 g und 2 Beutel zu 100 g des gemäss Beispiel 1 verpackten Farbstoffes der Formel ( 104),

4 Beutel zu 500 g des gemäss Beispiel 1 verpackten Farbstoffes der Formel (106),

10 kg Harnstoff,

1 kg Natriumkarbonat, kalziniert und

100 g eines Netzmittels.

Die Tauchzeit beträgt 2 Sekunden.

Anschliessend wird das foulardierte Gewebe 1 Minute bei 120° auf der Hotflue getrocknet und dann 1 Minute bei 160° auf der Hotflue thermofixiert.

Nach Spülen, Seifen, Spülen und Trocknen gemäss den Angaben in Beispiel 2 erhält man ein endengleich in orangerotem Farbton gefärbtes Baumwoll-Cretonne-Gewebe mit guten Echtheiten.

Beispiel 4:

Ein gebleichtes, Baumwoll-Trikot-Gewebe wird auf dem Foulard mit einem Abquetscheffekt von 70 % Flottenaufnahme imprägniert mit einer Klotzflotte nachstehender Zusammensetzung:

Je 100 l Flottenlösung:

1 Beutel zu 1000 g und 1 Beutel zu 500 g des gemäss Beispiel 1 verpackten Farbstoffes der Formel (103),

1 Beutel zu 1000 g des gemäss Beispiel 1 verpackten Farbstoffes der Formel (106),

2 Beutel zu 1000 g des gemäss Beispiel 1 verpackten Farbstoffes der Formel (105),

100 g eines Netzmittels,

7 l einer 33%-igen Wasserglaslösung, und

2,5 l einer 30%-igen Natronlauge.

Die Tauchzeit beträgt 2 Sekunden.

Anschliessend wird das foulardierte Gewebe in einer Plastikfolie luftdicht verpackt und 26 Stunden bei 25 °C gelagert.

Danach wird das Baumwoll-Trikot-Gewebe zunächst mit kaltem Wasser und dann mit heissem kochendem Wasser gespült, kochend mit 1 bis 2 g/l eines Waschmittels geseift, erneut mit heissem und dann mit kaltem Wasser gespült und danach getrocknet.

Man erhält eine egale, endengleiche beige Färbung mit guten Echtheiten.

Beispiel 5:

Ein Polyester-Viscose-Gewebe wird auf dem Foulard mit einem Abquetscheffekt von 55 % Flottenaufnahme imprägniert mit einer Klotzflotte nachstehender Zusammensetzung:

Je 100 l Flottenlösung:

1 Beutel zu 1000 g und 2 Beutel zu 100 g des gemäss Beispiel 1 verpackten Farbstoffes der Formel ( 106),

800 g des Farbstoffes der Formel

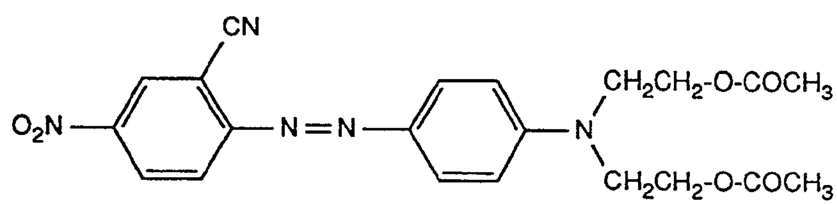

1000 g eines Verdickungsmittels, und

100 g eines Netzmittels.

Mit Essigsäure wird der pH-Wert auf 6 eingestellt.

Nach dem Foulardieren wird das Gewebe während einer Minute bei 120°C in einer Hotflue getrocknet, dann eine Minute bei 210°C thermosoliert, und anschliessend mit einer Flotte enthaltend 250 g/l NaCl und 10 ml/l einer 30%-igen Natronlauge mit einem Abquetscheffekt von 60 % foulardiert. Danach wird während einer Minute im Sattdampf bei 101 bis 103°C fixiert.

Nach Spülen, Seifen, Spülen und Trocknen gemäss Beispiel 2 erhält man ein Ton-in-Ton rot gefärbtes Polyester-Viscose-Gewebe.

Beispiel 6:

1 Beutel zu 500 g des gemäss Beispiel 1 verpackten Farbstoffes der Formel (110),

8 Beutel zu 100 g des gemäss Beispiel 1 verpackten Farbstoffes der Formel (114),

3 Beutel zu 100 g des gemäss Beispiel 1 verpackten Farbstoffes der Formel (109),

1 kg des Na-Salzes der m-Nitrobenzolsulfonsäure, und

50 kg NaCl

werden in 200 l kaltem Wasser gelöst. In dieses Färbebad geht man mit 10 kg Baumwoll-Trikot ein. Man

steigert die Temperatur auf 50°C und färbt bei dieser Temperatur während 45 Minuten. Dann gibt man bei 50°C 1 kg kalzinierte Soda und 400 ml 30%-ige NaOH hinzu und fixiert während 25 Minuten bei 50°C. Anschliessend spült, seift, spült und trocknet man das Baumwoll-Trikot gemäss den Angaben des Beispiels 2.

Man erhält ein beige gefärbtes Baumwoll-Trikot.

Beispiel 7:

12 Beutel zu 1 kg des gemäss Beispiel 1 verpackten Farbstoffs der Formel (103) werden in einem Vorratsgefäss bei Raumtemperatur in 88 kg Wasser gelöst. In gleicher Weise werden die Farbstoffe der Formeln ( 107) und ( 101 ) in je einem Vorratsgefäss gelöst.

Ein gebleichtes Baumwoll-Cretonne Gewebe wird auf dem Foulard mit einem Abquetscheffekt von 70 % Flottenaufnahme imprägniert mit einer Klotzflotte nachstehender Zusammensetzung:

Je 100 l Flottenlösung:
1 kg aus dem Vorratsgefäss mit dem Farbstoff der Formel (103),
5 kg aus dem Vorratsgefäss mit dem Farbstoff der Formel ( 107), und
8 kg aus dem Vorratsgefäss mit dem Farbstoff der Formel ( 101 ),
1000 g eines Verdickungsmittels,
100 g eines Netzmittels, und
200 g des Natriumsalzes der m-Nitrobenzolsulfonsäure.

Die Tauchzeit beträgt 2 Sekunden.

Nach dem Foulardieren wird das Baumwoll-Cretonne-Gewebe während einer Minute bei 100°C getrocknet, foulardiert mit einer Flotte enthaltend 250 g/l NaCl und 10 ml/l 30%ige NaOH mit einem Abquetscheffekt von ca. 80 % und dann während einer Minute im Sattdampf bei 101 bis 103° fixiert.

Danach wird das Baumwoll-Cretonne-Gewebe zunächst mit kaltem Wasser und dann mit heissem bis kochendem Wasser gespült, kochend mit 1 bis 2 g/l eines Waschmittels geseift, erneut mit heissem und dann mit kaltem Wasser gespült und danach getrocknet.

Man erhält eine egale, endengleiche olive Färbung mit guten Echtheiten.

Beispiel 8:

In gleicher Weise wie in Beispiel 7 angegeben, wird der Farbstoff der Formel ( 104) in einem Vorratsgefäss gelöst.

Ein gebleichtes, mercerisiertes Baumwoll-Cretonne-Gewebe wird auf dem Foulard mit einem Abquetscheffekt von 70 % Flottenaufnahme imprägniert mit einer Klotzflotte nachstehender Zusammensetzung:

Je 100 l Flottenlösung:
2 kg aus dem Vorratsgefäss mit dem Farbstoff der Formel (104),
2 Beutel zu 500 g des gemäss Beispiel 1 verpackten Farbstoffs der Formel (104),
4 Beutel zu 500 g des gemäss Beispiel 1 verpackten Farbstoffes der Formel (106),
10 kg Harnstoff,
1 kg Natriumkarbonat, kalziniert und
100 g eines Netzmittels.

Die Tauchzeit beträgt 2 Sekunden.

Anschliessend wird das foulardierte Gewebe 1 Minute bei 120° auf der Hotflue getrocknet und dann 1 Minute bei 160° auf der Hotflue thermofixiert.

Nach Spülen, Seifen, Spülen und Trocknen gemäss den Angaben in Beispiel 2 erhält man ein endengleich in orangerotem Farbton gefärbtes Baumwoll-Cretonne-Gewebe mit guten Echtheiten.

Beispiel 9:

800 g einer Stammverdickung, enthaltend pro kg 520 g 6%-ige Natriumalginat-Verdickung, 125 g Harnstoff, 25 g Natriumcarbonat, 12,5 g des Natriumsalzes der m-Nitrobenzolsulfonsäure, 4 g 40%-ige wässrige Formaldehydlösung und 313,5 g Wasser, werden vorgelegt, 50 g des gemäss Beispiel 1 in 5 Beutel zu 10 g verpackten Farbstoffes der Formel (107) werden darauf gelegt und dann mit 150 g Wasser übergossen. Die mit Wasser übergossenen Farbstoffbeutel lösen sich nach ca. 3 bis 5 Minuten auf, und versinken anschliessend in die vorgelegte Stammverdickung. Anschliessend wird die Stammverdickung zusammen mit dem Farbstoff und dem zugesetzten Wasser mit einem Schnellrührer verrührt.

Mit der so erhaltenen Druckpaste wird in herkömmlicher Weise (Flach- oder Rotationsfilmdruck oder Rouleauxdruck) ein Baumwollgewebe bedruckt und anschliessend getrocknet und mit Sattdampf während 5 Minuten fixiert. Das bedruckte Gewebe wird dann gespült und anschliessend getrocknet. Es wird ein roter Druck erhalten.

Beispiel 10:

Herstellung einer Stammlösung

In einem Aufbereitungsbehälter [(1) in Fig. 1] werden 50 l Wasser vorgelegt. 24 Beutel zu je 1 kg des gemäss Beispiel 1 verpackten Farbstoffes der Formel (103) werden in den Aufbereitungsbehälter eingegeben. Nach ca. 3 Minuten wird die Umwälzpumpe [(2) in Fig. 1] eingeschaltet und 15 Minuten laufen gelassen. Anschliessend werden 26 l Wasser zugegeben und noch 15 Minuten im Kreislauf [Aufbereitungsbehälter (1)-Leitungssystem (3) - Aufbereitungsbehälter (1) in Fig. 1] gepumpt bis der Farbstoff vollständig aufgelöst ist. Dann wird diese Lösung über ein Dreiwegeventil [(4) in Fig. 1] in einen Auffangtank [(6) in Fig. 1] gepumpt. Man erhält 100 kg einer hochkonzentrierten Farbstofflösung, die zur Herstellung von Färbeflotten oder Druckpasten eingesetzt werden kann.

Wenn man anstelle von 24 Beuteln zu je 1 kg Farbstoff der Formel (103) einen Beutel zu 24 kg verwendet, so erhält man eine identische Farbstofflösung.

## Patentansprüche

1. Stabile, staubfreie Handelsform enthaltend mindestens einen wasserlöslichen monoreaktiven Farbstoff, welcher einen Monofluor-s-triazinreaktivrest enthält, und/oder mindestens einen wasserlöslichen polyreaktiven Farbstoff in einer Hülle aus Polyvinylalkohol.

2. Handelsform gemäss Anspruch 1, enthaltend mindestens einen monoreaktiven Farbstoff der Formel

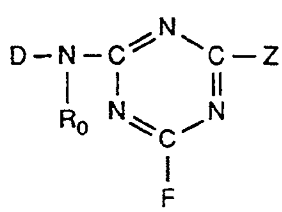

(1),

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin-, Stilben-, Triphenylmethan-, Xanthen-, Thioxanthon-, Naphthochinon-, Pyrenchinon- oder Perylentetracarbimid-Reihe, $R_0$ Wasserstoff oder gegebenenfalls substituiertes $C_1$-$C_4$-Alkyl, und Z eine gegebenenfalls substituierte Aminogruppe, eine gegebenenfalls substituierte Mercaptogruppe, eine gegebenenfalls substituierte Hydroxygruppe, oder ein gegebenenfalls substituierter Kohlenwasserstoffrest ist.

3. Handelsform gemäss Anspruch 2, enthaltend mindestens einen Farbstoff der Formel ( 1 ), worin Z $-NH_2$ oder der Rest eines aliphatischen, aromatischen oder heterocyclischen Amins ist, insbesondere worin Z $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino ist, wobei die Alkylreste durch $C_1$-$C_4$ Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann, oder worin Z Morpholino ist.

4. Handelsform gemäss Anspruch 1, enthaltend mindestens einen bi-, tri- oder tetrareaktiven Farbstoff.

5. Handelsform gemäss einem der Ansprüche 1 und 4, enthaltend mindestens einen Farbstoff der Formel

$$D-(X)_{2-4} \qquad (2),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin-, Stilben-, Triphenylmethan-, Xanthen-, Thioxanthon-, Naphthochinon-, Pyrenchinon- oder Perylentetracarbimid-Reihe, und $-(X)_{2-4}$ für 2, 3 oder 4 identische oder voneinander verschiedene faserreaktive Reste X der aliphatischen, aromatischen oder heterocyclischen Reihe steht, wobei diese direkt oder über einen Brückenglied an D gebunden sind.

**6.** Handelsform gemäss einem der Ansprüche 1, 4 und 5, enthaltend mindestens einen Farbstoff der Formeln

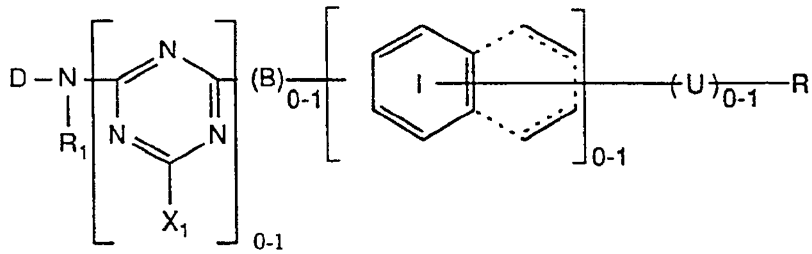

(30),

$(R\text{-}U)_n\text{—}D\text{—}(Z_1)_{n'}$ (31),

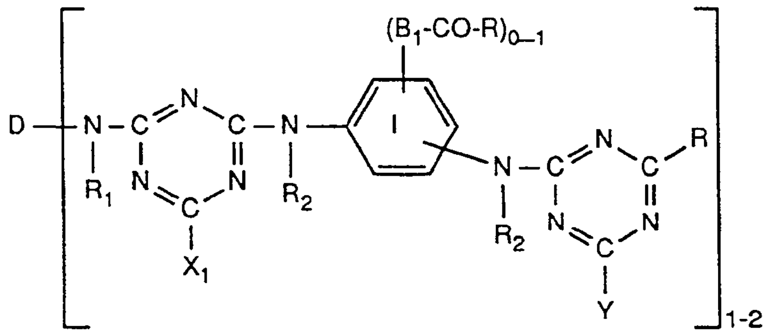

(32) und

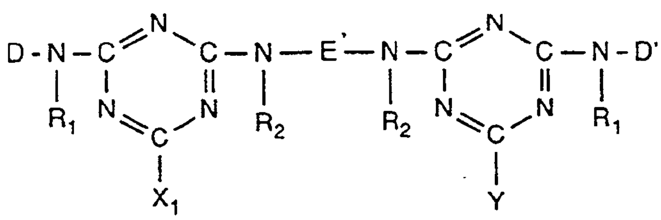

(33),

worin D und D′ unabhängig voneinander jeweils der Rest eines organischen Farbstoffes der Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, insbesondere worin D und D′ unabhängig voneinander ein Rest der Formel (9) oder (11) bis (21) ist, $R_1$ und $R_2$ unabhängig voneinander Wasserstoff, gegebenenfalls substituiertes $C_1$-$C_4$-Alkyl oder gegebenenfalls substituiertes Phenyl, $X_1$ und Y unabhängig voneinander Fluor,Chlor,Brom, oder ein Rest der Formeln

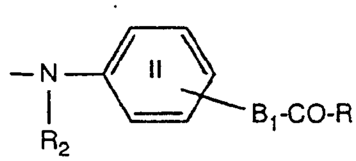

(34a) oder

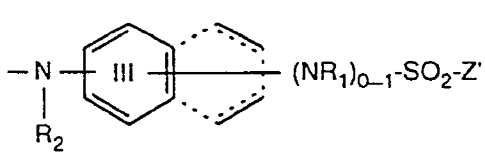

(34b),

B ein Rest der Formel

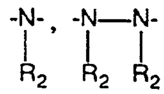

oder

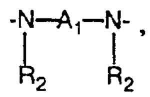

$A_1$ ein aliphatisches oder aromatisches Brückenglied, wie z.B. für $A_2$ und $A_3$ angegeben, U -CO- oder $-SO_2-$,

$B_1$ die direkte Bindung,

$$-(CH_2)_{1-6}-$$

oder

$$-O-(CH_2)_{1-6}-, Z_1$$

ein aliphatischer, aromatischer oder heterocyclischer Reaktivrest, R ein Rest der Formel

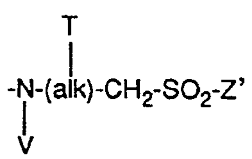
(10a),

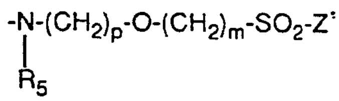
(10b),

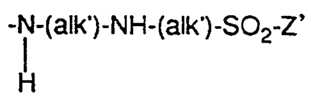
(10c),

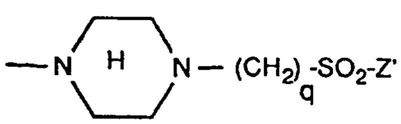
(10d),

Z' β-Sulfatoäthyl, β-Thiosulfatoäthyl, β-Acyloxyäthyl, β-Halogenäthyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z'$, worin Z' die oben angegebene Bedeutung hat; $R_5$ Wasserstoff oder $C_1$-$C_6$-Alkyl; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

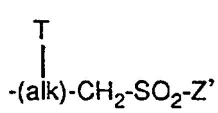
(10e),

worin Z', alk und T die angegebenen Bedeutungen haben; alk' unabhängig voneinander Polymethylenreste

mit 2 bis 6 C-Atomen oder deren verzweigte Isomere; und m = 1 bis 6, p = 1 bis 6 und q = 1 bis 6 ist, n und n' je die Zahl 1 oder 2 ist und n+n' = 2, 3 oder 4 ist, E' ein Rest der Formel

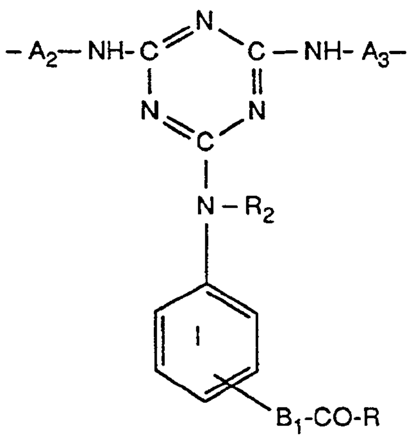

(35),

$A_2$ und $A_3$ unabhängig voneinander je ein Rest der Formel

$-(CH_2)_{1-6}-$ (36a)

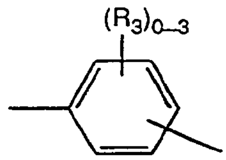

(36b)

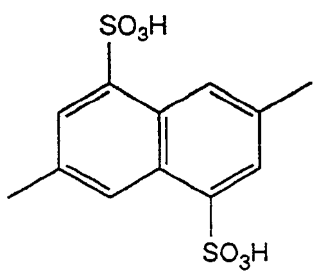

(36c) oder

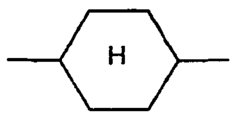

(36d);

oder

$X_1$ in Formel (33) ein Rest der Formel

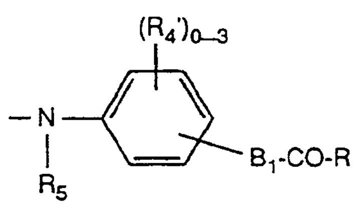

(37)

und E' ein Rest der Formel (36a), (36b), (36c) oder (36d) ist; und $R_3$ und $R_{4'}$ unabhängig voneinander für 0 bis 3 Substituenten aus der Gruppe $C_{1-4}$-Alkyl, $C_{1-4}$-Alkoxy, Halogen, Carboxy und Sulfo steht; und die Benzolkerne I und II oder der Benzol- bzw. Naphthalinkern III unabhängig voneinander weitere Substituenten enthalten können.

**7.** Handelsform gemäss Anspruch 6, enthaltend mindestens einen Farbstoff der Formel

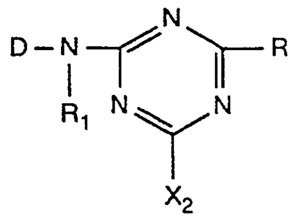

(47),

worin D, $R_1$ und R die in Anspruch 6 angegebenen Bedeutungen haben und $X_2$ Fluor oder Chlor ist.

8. Handelsform gemäss einem der Ansprüche 1 bis 7, dadurch gekennzeichnet, dass der Gehalt an Polyvinylalkohol 0,2 bis 5 Gewichtsprozent der eingesetzten Farbstoffmenge entspricht.

9. Handelsform gemäss einem der Ansprüche 1 bis 8, dadurch gekennzeichnet, dass die Hülle aus Polyvinylalkohol eine Dicke von 25 bis 40 μm hat.

10. Handelsform gemäss einem der Ansprüche 1 bis 9, dadurch gekennzeichnet, dass die Hülle aus Polyvinylalkohol ausser den faserreaktiven Farbstoffen und gegebenenfalls den kationischen Farbstoffen 0 bis 10 Gewichtsprozent eines Coupagemittels enthält.

11. Luftarme Handelsform gemäss einem der Ansprüche 1 bis 10.

12. Verwendung von wasserlöslichen Hüllen aus Polyvinylalkohol in Beutelform als Verpackungsmaterial für monoreaktive oder polyreaktive Farbstoffe gemäss Anspruch 1.

13. Verfahren zum Färben von textilen Fasermaterialien mit monoreaktiven oder polyreaktiven Farbstoffen, dadurch gekennzeichnet, dass man eine allseitig verschlossene Hülle aus wasserlöslichem Polyvinylalkohol, enthaltend monoreaktive oder polyreaktive Farbstoffe gemäss Anspruch 1, in ein wässriges Färbebad eintaucht und nach dem Auflösen der Hülle gleichmässig verteilt.

14. Verfahren gemäss Anspruch 13, dadurch gekennzeichnet, dass man eine allseitig verschlossene luftarme Hülle aus wasserlöslichem Polyvinylalkohol verwendet.

15. Verfahren gemäss Anspruch 13, dadurch gekennzeichnet, dass man die allseitig verschlossene Hülle aus Polyvinylalkohol in einem separaten Bad auflöst und die Lösung dann in das Färbebad oder das Färbegefäss überführt.

16. Verfahren gemäss einem der Ansprüche 13 bis 15, dadurch gekennzeichnet, dass die gefüllte Hülle aus Polyvinylalkohol in Beutelform vorliegt.

17. Verfahren zur Herstellung neuer Handelsformen von monoreaktiven oder polyreaktiven Farbstoffen, dadurch gekennzeichnet, dass man Farbstoffpulver in eine wasserlösliche Hülle aus Polyvinylalkohol einschliesst, und gegebenenfalls diese Hülle in eine zweite, vorzugsweise wasserunlösliche Hülle einschliesst.

18. Verfahren zur Herstellung von Farbstofflösungen aus den erfindungsgemässen Handelsformen gemäss Anspruch 1 bei dem entsprechend einer gewünschten Lösungsmenge mit bestimmter Farbstoffkonzentration eine Menge eines pulverförmigen Farbstoffes (C) in einer bestimmten Menge eines Lösungsmittels (S), insbesondere in Wasser, aufgelöst wird, dadurch gekennzeichnet, dass der pulverförmige, wasserlösliche monoreaktive Farbstoff (C), welcher einen Monofluor-s-triazinrest enthält, und/oder mindestens ein wasserlöslicher polyreaktiver Farbstoff (C) in einer Hülle aus Polyvinylalkohol in einen Aufbereitungsbehälter ( 1 ) eingebracht wird, dass die gesamte Farbstoffmenge mit etwa 1/3 - 2/3 der Lösungsmittelmenge in den Aufbereitungsbehälter (1) vermengt wird, dass das Farbstoff-Lösungsmittelgemisch so lange in einem mit dem Aufbereitungsbehälter (1) verbundenen Leitungssystem (3) von einer Umwälzpumpe (2) im Kreis gepumpt wird, bis der Farbstoff (C) vollständig gelöst ist, dass diese erste Lösung in einem Auffangtank (6) umgepumpt wird, der über eine Dreiwegventileinrichtung (4) mit dem Leitungssystem (3) in Verbindung steht, und dass die restliche Lösungsmittelmenge in dem Leitungssystem (3) und dem Aufbereitungsbehälter (1) umgepumpt wird, um diese zu reinigen, bevor sie zur Einstellung der gewünschten Farbstoffkonzentration der Farbstofflösung in den Auffangtank (6) geleitet und mit der ersten Lösung vermischt wird.

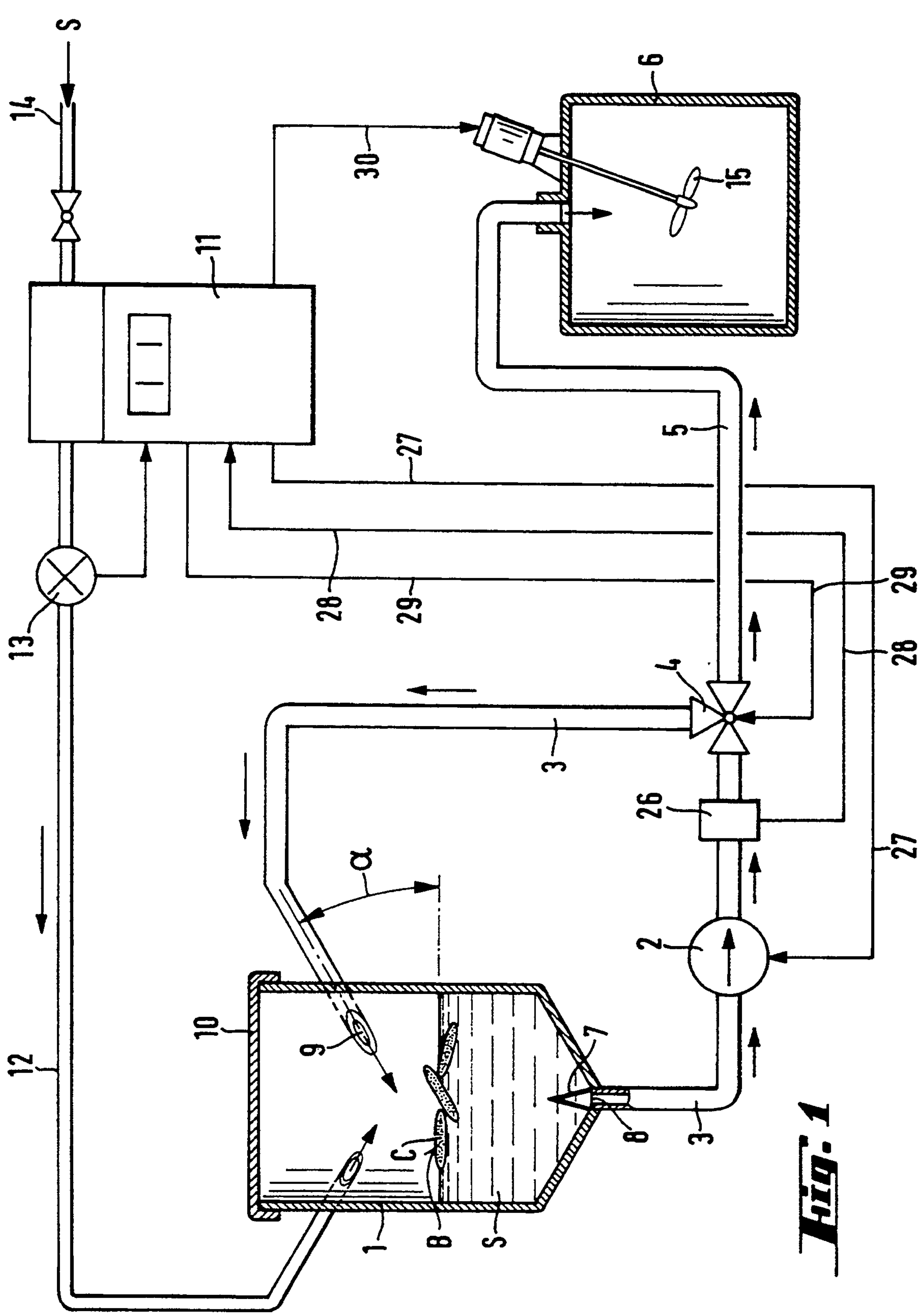


Fig. 1

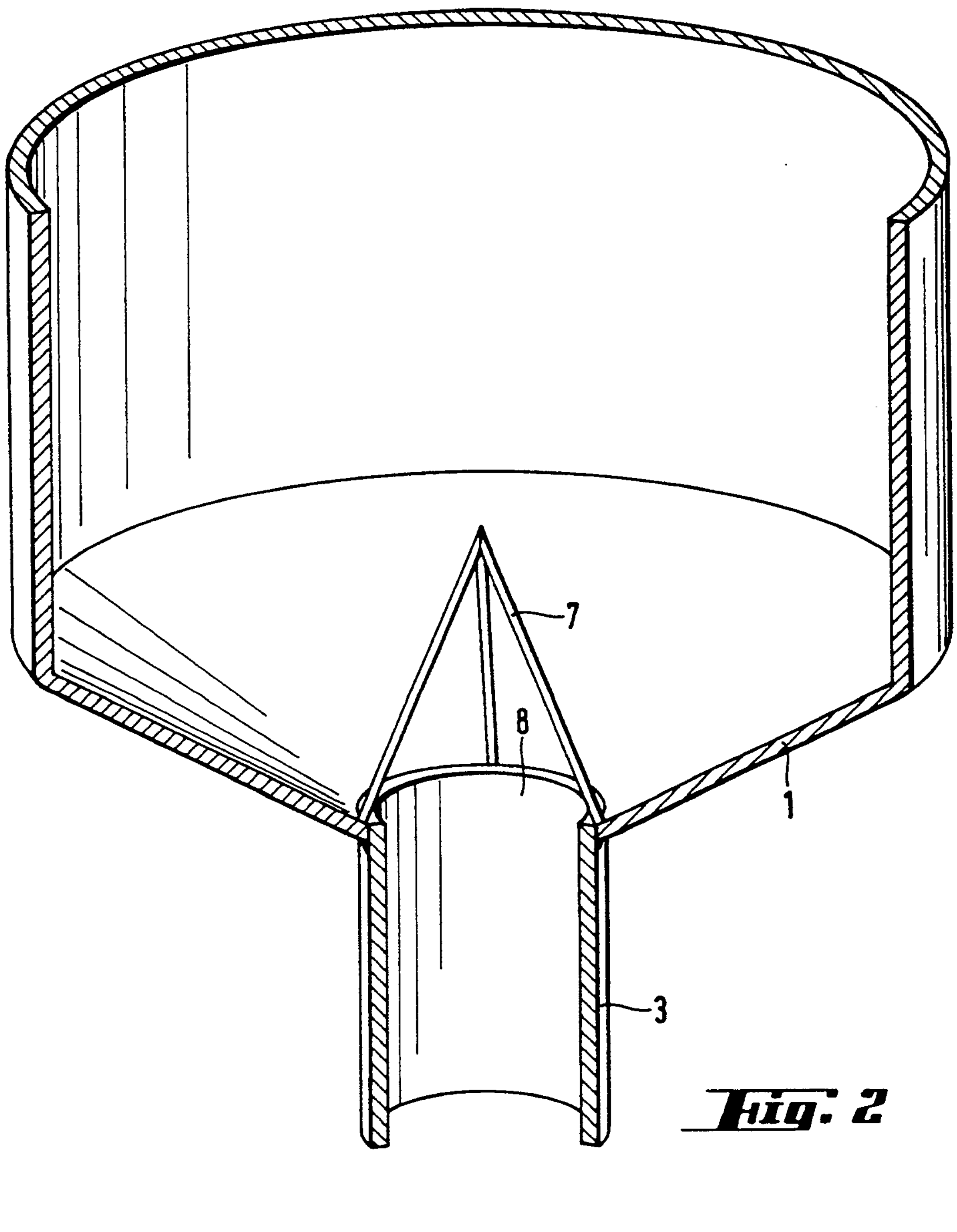


Fig. 2